# EUROPEAN PATENT APPLICATION

(11) **EP 4 378 607 A1**
(43) Date of publication of application: **05.06.2024**
(21) Application number: 23211195.5
(22) Date of filing: 21.11.2023
(51) Int. Cl.: B22F 10/14, B22F 10/32, B22F 10/322, B22F 12/00, B22F 12/70, B28B 1/00, B29C 64/165, B29C 64/25, B29C 64/371, B33Y 10/00, B33Y 30/00, B33Y 50/02, B22F 12/88, B29C 64/379

(54) **THREE-DIMENSIONAL FABRICATION APPARATUS AND THREE-DIMENSIONAL FABRICATION METHOD**

(30) Priority: 29.11.2022 JP 2022190257; 27.07.2023 JP 2023122466
(71) Applicant: Ricoh Company, Ltd., Tokyo 143-8555 (JP)
(72) Inventor: SUGIURA, Kenji, Tokyo, 143-8555 (JP); ISHII, Hiromitsu, Tokyo, 143-8555 (JP)
(74) Representative: SSM Sandmair

(57) **Abstract**

A three-dimensional fabrication apparatus (100, 100a) includes a fabrication section (1), a liquid discharge unit (50), a housing (80), and a gas replacer (701, 801, 901, 2101, 2201). The fabrication section (1) forms a powder layer with a fabrication material in a fabrication area. The liquid discharge unit (50) discharges a fabrication liquid onto the powder layer to form a fabrication layer. The housing (80) has an internal space accommodating at least one of the fabrication section (1) or the liquid discharge unit (50). The gas replacer (701, 801, 901, 2101, 2201) to generate and supply a laminar flow of a predetermined gas other than an air into the internal space of the housing (80) to replace an ambient gas in the internal space from the air to the predetermined gas.

## Description

### BACKGROUND

### Technical Field

Embodiments of the present disclosure relate to a three-dimensional fabrication apparatus and a three-dimensional fabrication method.

### Related Art

A three-dimensional fabrication apparatus uses, for example, additive manufacturing to fabricate a solid (three-dimensional) object. For example, Japanese Patent No. 6565489 discloses a three-dimensional fabrication method of forming a three-dimensional object by stacking layered objects formed by bonding powder of powder layers. However, Japanese Patent No. 6565489 does not describe efficient use of gas.

### SUMMARY

The present disclosure has an object to utilize gas efficiently.

Embodiments of the present disclosure describe an improved three-dimensional fabrication apparatus that includes a fabrication section, a liquid discharge unit, a housing, and a gas replacer. The fabrication section forms a powder layer with a fabrication material in a fabrication area. The liquid discharge unit discharges a fabrication liquid onto the powder layer to form a fabrication layer. The housing has an internal space accommodating at least one of the fabrication section or the liquid discharge unit. The gas replacer to generate and supply a laminar flow of a predetermined gas other than an air into the internal space of the housing to replace an ambient gas in the internal space from the air to the predetermined gas.

According to another embodiment of the present disclosure, there is provided a three-dimensional fabrication method including forming a powder layer in a fabrication area, discharging a fabrication liquid onto the powder layer, and generating and supplying a laminar flow of a predetermined gas other than an air into the fabrication area to replace an ambient gas in the fabrication area from the air to the predetermined gas.

As a result, according to one aspect of the present disclosure, gas can be utilized efficiently.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a plan view of a three-dimensional fabrication apparatus according to embodiments of the present disclosure;
FIG. 2 is a side view of a three-dimensional fabrication apparatus according to embodiments of the present disclosure;
FIG. 3 is a perspective view of a part of a three-dimensional fabrication apparatus according to embodiments of the present disclosure;
FIG. 4 is a perspective view of a fabrication section of a three-dimensional fabrication apparatus according to embodiments of the present disclosure;
FIG. 5 is a block diagram of a controller of a three-dimensional fabrication apparatus according to embodiments of the present disclosure;
FIGS. 6A to 6F are diagrams each illustrating an operation of fabricating a three-dimensional object according to embodiments of the present disclosure;
FIG. 7 is a schematic side view of an atmosphere replacement unit of a three-dimensional fabrication apparatus according to a first embodiment of the present disclosure;
FIG. 8 is a schematic top view of a gas supply system of the atmosphere replacement unit of FIG. 7, according to the first embodiment of the present disclosure;
FIG. 9 is a schematic bottom view of an exhaust system of the atmosphere replacement unit of FIG. 7, according to the first embodiment of the present disclosure;
FIG. 10 is a graph illustrating an effect of the atmosphere replacement unit of FIG. 7, according to the first embodiment of the present disclosure;
FIG. 11 is a schematic side view of the atmosphere replacement unit of FIG. 7, in which oxygen concentration meters are installed, according to the first embodiment of the present disclosure;
FIG. 12 is a graph illustrating changes in the values of the respective oxygen concentration meters of FIG. 11 when a boundary layer is formed;
FIG. 13 is a diagram illustrating changes in the values of the respective oxygen concentration meters of FIG. 11 when no boundary layer is formed;
FIG. 14 is a schematic plan view of a gas rectifier according to embodiments of the present disclosure;
FIG. 15 is a schematic side view of an atmosphere replacement unit according to a first modification of the first embodiment of the present disclosure;
FIG. 16 is a schematic side view of an atmosphere replacement unit according to a second modification of the first embodiment of the present disclosure;
FIG. 17 is a diagram illustrating the process of atmosphere replacement by the atmosphere replacement unit of FIG. 7, according to the first embodiment of the present disclosure;
FIG. 18 is a diagram illustrating the process of atmosphere replacement by the atmosphere replacement unit of FIG. 15, according to the first modification of the first embodiment of the present disclosure;
FIG. 19 is a diagram illustrating the process of atmosphere replacement by the atmosphere replacement unit of FIG. 16, according to the second modification of the first embodiment;
FIG. 20 is a schematic side view of an atmosphere replacement unit of a three-dimensional fabrication apparatus according to a second embodiment of the present disclosure;
FIG. 21 is a schematic side view (as viewed in the Y direction) of an atmosphere replacement unit according to a modification of the second embodiment of the present disclosure;
FIG. 22 is a schematic top view of the atmosphere replacement unit of FIG. 21, according to the modification of the second embodiment of the present disclosure;
FIG. 23 is a schematic side view (as viewed in the X direction) of the atmosphere replacement unit of FIG. 21, according to the modification of the second embodiment of the present disclosure;
FIG. 24 is a diagram illustrating the process of atmosphere replacement by the atmosphere replacement unit of FIG. 21, according to the modification of the second embodiment of the present disclosure;
FIG. 25 is a side view of a three-dimensional fabrication apparatus according to a third embodiment of the present disclosure; and
FIG. 26 is a schematic view of a three-dimensional fabrication robot according to embodiments of the present disclosure.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure are described below with reference to the accompanying drawings. In order to facilitate the understanding of the description, like reference signs denote like elements in the drawings, and overlapping description may be simplified or omitted as appropriate.

In the following description, an X direction, a Y direction, and a Z direction are perpendicular to each other. The X direction and the Y direction are horizontal directions, and the Z direction is a vertical direction. The X direction is the moving direction of a liquid discharge unit 50 that moves along guides 54 and 55. The Y direction is the moving direction of a fabrication unit 5 that moves along a guide 71. The Z direction is a direction in which a supply stage 23, a fabrication stage 24, and the liquid discharge unit 50 are raised and lowered. In the description given below, a positive side in the Z direction may be referred to as an upper side, and a negative side in the Z direction may be referred to as a lower side, for the convenience of description.

Basic Configuration of Three-dimensional Fabrication Apparatus

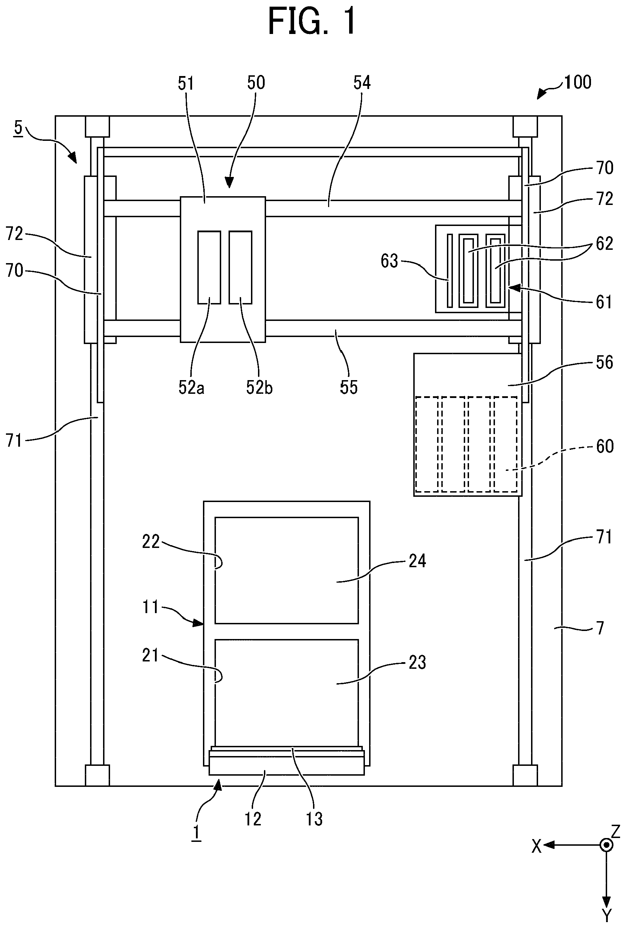

A three-dimensional fabrication apparatus 100 according to an embodiment of the present disclosure is described with reference to FIGS. 1 to 6F.

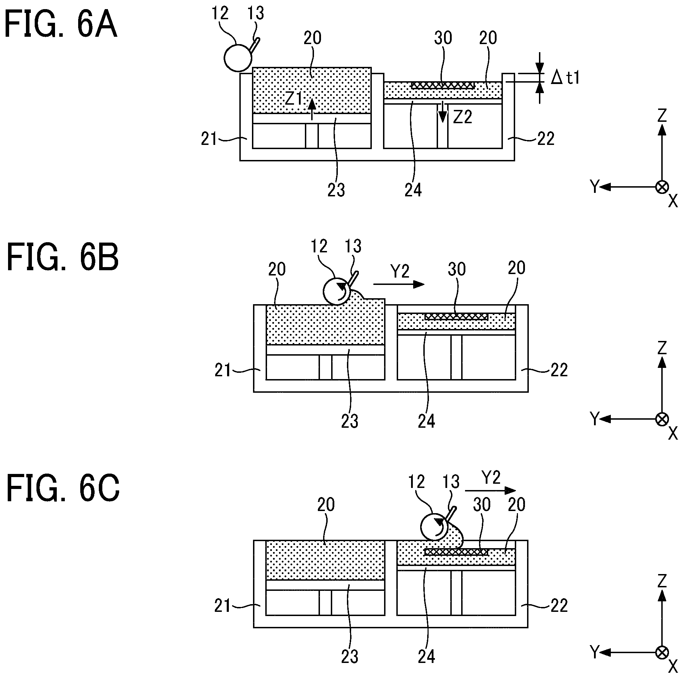

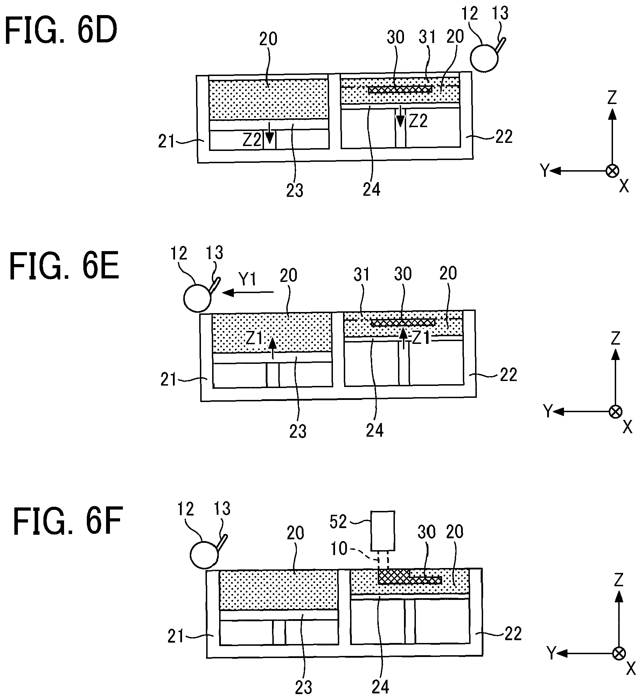

In the following description, a layer of powder 20 formed on the fabrication stage 24 (i.e., a fabrication area) is referred to as a "powder layer 31" as illustrated in FIGS 6A to 6F. The powder layer 31 may be a flattened layer. The powder 20 serving as a fabrication material contains a metal or a nonmetal. The powder layer 31 onto which a fabrication liquid 10 (see FIG. 6F) has been discharged is referred to as a "fabrication layer 30." The fabrication layer 30 is a layer of object to be fabricated in which the powder 20 is bonded by the discharged fabrication liquid 10. The "powder layer 31" and the "fabrication layer 30" each refer to a single layer. An aggregate of multiple fabrication layers 30 laminated one on another before fabrication is completed is referred to as a "fabrication object." On the other hand, a completed product of the multiple fabrication layers 30 laminated one on another is referred to as a "three-dimensional object." The "three-dimensional object" may be a sintered fabrication object when the powder 20 is metal.

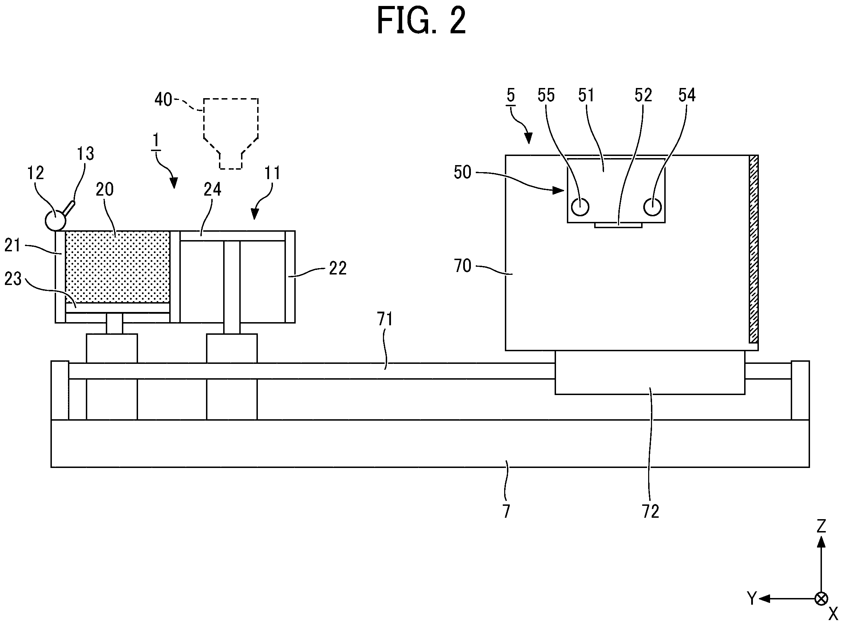

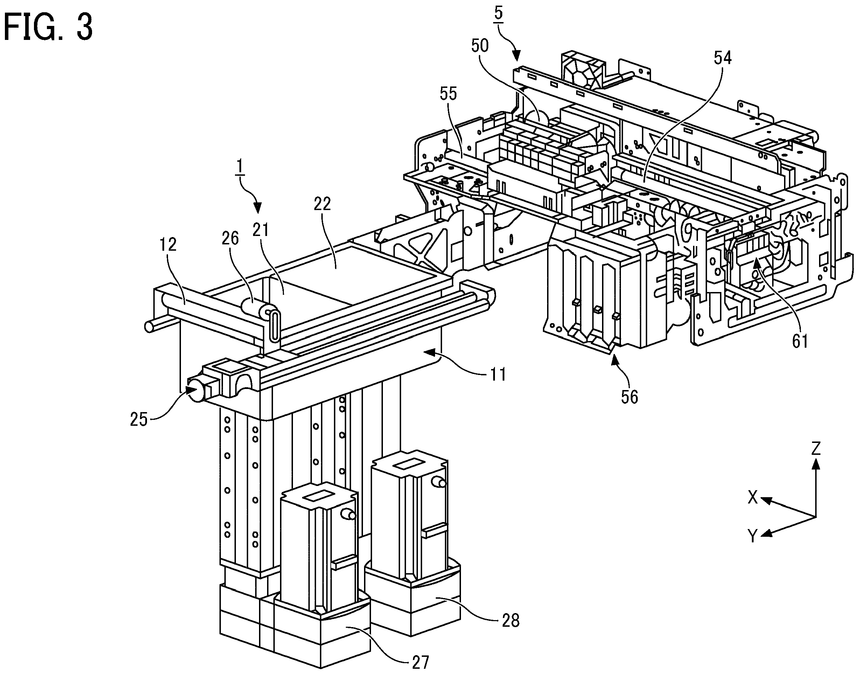

FIG. 1 is a plan view of the three-dimensional fabrication apparatus 100 according to the present embodiment. FIG. 2 is a side view of the three-dimensional fabrication apparatus 100 according to the present embodiment. FIG. 3 is a perspective view of a part of the three-dimensional fabrication apparatus 100 according to the present embodiment.

The three-dimensional fabrication apparatus 100 according to the present embodiment is a powder fabrication apparatus that laminates layers of the powder 20 to fabricate a three-dimensional object. The three-dimensional fabrication apparatus 100 may be referred to as a solid freeform fabrication apparatus or a three-dimensional printer (3D printer).

The three-dimensional fabrication apparatus 100 includes a fabrication section 1, the fabrication unit 5, and a maintenance mechanism 61. The fabrication layer 30 which is a layer of object to be fabricated is formed in the fabrication section 1. The fabrication layer is formed of the bonded powder 20. The fabrication unit 5 discharges the fabrication liquid 10 to the powder layer 31 spread in a layer in the fabrication section 1 to fabricate a three-dimensional obj ect.

The fabrication section 1 includes a powder chamber 11, a flattening unit 12, a motor 26, a motor 27, a motor 28, and a powder removal plate 13.

The powder chamber 11 includes a supply chamber 21 and a fabrication chamber 22. The powder 20 is supplied to the supply chamber 21, and then supplied from the supply chamber 21 to the fabrication chamber 22. The fabrication layers 30 are laminated in the fabrication chamber 22 to fabricate a three-dimensional object. The supply chamber 21 includes the supply stage 23 onto which the powder 20 is supplied. The fabrication chamber 22 includes the fabrication stage 24 on which the fabrication layers 30 are laminated.

The motors 27 and 28 respectively raise and lower the supply stage 23 and the fabrication stage 24.

The supply stage 23, which is the bottom portion of the supply chamber 21, is movable in the vertical direction (height direction) by the motor 27. Similarly, the fabrication stage 24, which is the bottom portion of the fabrication chamber 22, is movable in the vertical direction (height direction) by the motor 28. More specifically, the supply stage 23 and the fabrication stage 24 are moved up and down in the Z direction indicated by arrows Z1 and Z2 in FIGS. 6A to 6F. Side faces of the supply stage 23 contact inner side faces of the supply chamber 21. Side faces of the fabrication stage 24 contact inner side faces of the fabrication chamber 22. The upper surfaces of the supply stage 23 and the fabrication stage 24 are kept horizontal.

The flattening unit 12 flattens the powder 20. The motor 26 rotationally drives the flattening unit 12. The flattening unit 12 may be a rotator as a recoater or a plate as a blade. The flattening unit 12 supplies the powder 20 supplied onto the supply stage 23 of the supply chamber 21 to the fabrication chamber 22 and flattens the powder 20 in the fabrication chamber 22 to form the powder layer 31.

As illustrated in FIG. 3, the flattening unit 12 is disposed extending in the X direction, which is a direction along a stage surface (a surface over which the powder 20 is layered) of the fabrication stage 24. A reciprocal moving assembly 25 (see FIG. 3) reciprocally moves the flattening unit 12 relative to the stage surface of the supply stage 23 and the fabrication stage 24 in the Y direction indicated by arrows Y1 and Y2 in FIGS. 6A to 6F. The motor 26 rotates the flattening unit 12 in a counter direction with respect to the moving direction of the flattening unit 12. The counter direction herein means that the flattening unit 12 moves and rotates in a direction in which a portion of the flattening unit 12 facing the powder 20 moves in the same direction as a direction in which the flattening unit 12 moves to form the powder layer 31 as illustrated in FIGS. 6B and 6C. The flattening unit 12 horizontally moves to pass through an area above the supply chamber 21 and the fabrication chamber 22 from outside of the supply chamber 21 while being rotated. Accordingly, the powder 20 is transferred and supplied into the fabrication chamber 22, and the flattening unit 12 flattens the powder 20 while passing over the fabrication chamber 22. As a result, the powder layer 31 is formed in the fabrication chamber 22.

In the present embodiment, the powder chamber 11 includes two chambers, the supply chamber 21 and the fabrication chamber 22. Alternatively, the powder chamber 11 may include only the fabrication chamber 22. In this case, the powder may be directly supplied to the fabrication chamber 22 by, for example, a storage hopper 40 indicated by a broken line in FIG. 2 and flattened by the flattening unit 12.

The powder removal plate 13 removes the powder 20 adhering to the flattening unit 12. The powder removal plate 13 moves together with the flattening unit 12 while contacting the circumferential surface of the flattening unit 12. As a result, the powder 20 adhering to the flattening unit 12 is removed. The powder removal plate 13 contacts the flattening unit 12 against the rotation direction of the flattening unit 12 which is flattening the powder 20.

The fabrication unit 5 includes the liquid discharge unit 50. The liquid discharge unit 50 includes a carriage 51, a head 52, and a tank mount 56.

The liquid discharge unit 50 discharges the fabrication liquid 10 from the head 52 to the powder layer 31 over the fabrication stage 24. In the present embodiment, the liquid discharge unit 50 includes two liquid discharge heads 52a and 52b as illustrated in FIG. 1, which may be collectively referred to as the heads 52, each of which may be referred to as the head 52 unless distinguished. The number of the heads 52 may be one or three or more. Each of the two liquid discharge heads 52a and 52b includes two nozzle rows in each of which a plurality of nozzles is arranged to discharge liquid.

Multiple tanks 60 are mounted on the tank mount 56. The liquid is supplied from the multiple tanks 60 to the liquid discharge heads 52a and 52b.

The fabrication unit 5 includes a slider 72 slidably supported by the guide 71 disposed above a base 7. The entire fabrication unit 5 is reciprocally movable in the Y direction (subscanning direction) perpendicular to the X direction. The carriage 51 is supported by the guides 54 and 55 to move the head 52. Side plates 70 holding the guides 54 and 55 are movable up and down in the Z direction.

The maintenance mechanism 61 maintains the liquid discharge unit 50. The maintenance mechanism 61 includes caps 62 and a wiper 63. The caps 62 are brought into close contact with the nozzle faces (a surface on which the nozzles are arranged) of the heads 52 to suck the fabrication liquid 10. The powder 20 and the thickened fabrication liquid 10 clogging the nozzles in the liquid discharge unit 50 can be discharged. The wiper 63 wipes the nozzle face of the head 52. When the fabrication liquid 10 is not discharged, the maintenance mechanism 61 covers the nozzle faces of the heads 52 with the caps 62 to prevent powder 20 from entering the nozzles and to prevent the fabrication liquid 10 from drying.

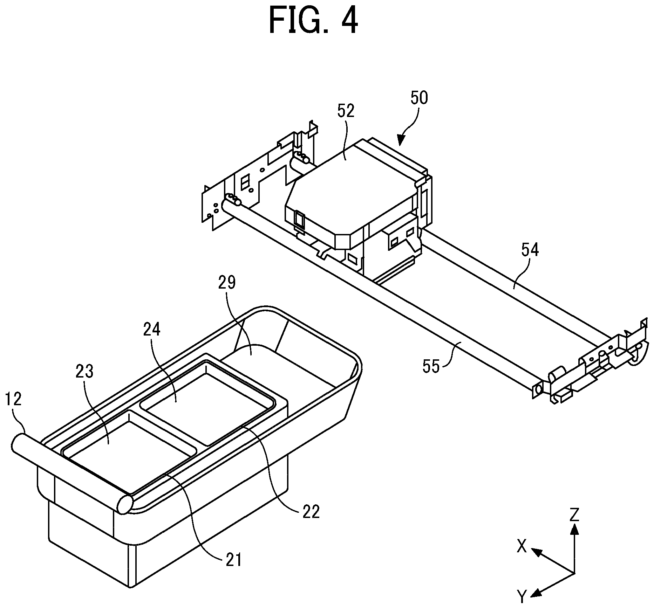

FIG. 4 is a perspective view of the fabrication section 1 of the three-dimensional fabrication apparatus 100 according to the present embodiment. A surplus powder chamber 29 receives the powder 20 overflowed from the fabrication chamber 22 and the supply chamber 21 as surplus powder. When the powder layer 31 is formed, the surplus powder, which is a surplus of the powder 20 transferred and supplied by the flattening unit 12, is generated, and the surplus powder is held in the surplus powder chamber 29. Then, the surplus powder is returned to the supply chamber 21. The surplus powder chamber 29 is disposed adjacent to the fabrication chamber 22 and is an open-topped recess.

The supply chamber 21 is provided with a powder supply device 554. The powder supply device 554 stores the powder 20 for fabrication, and also stores the surplus powder held in the surplus powder chamber 29. The powder 20 for fabrication is supplied from the powder supply device 554 to the supply chamber 21. Examples of a method of powder conveyance for supplying the powder 20 include a screw conveyor system using a screw and an air conveyance system using air.

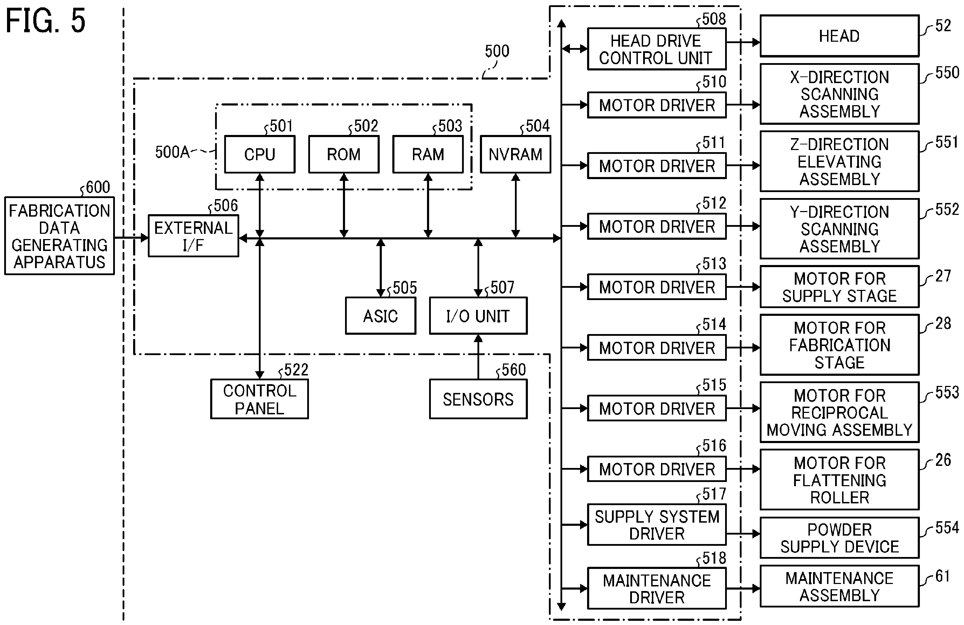

FIG. 5 is a block diagram of a controller 500 of the three-dimensional fabrication apparatus 100 according to the present embodiment. The controller 500 of the three-dimensional fabrication apparatus 100 is connected to a control panel 522 to input information to the three-dimensional fabrication apparatus 100, sensors 560 to detect, for example, temperature and humidity in a fabrication environment, a fabrication data generating apparatus 600, and various control units and drivers of the three-dimensional fabrication apparatus 100. The controller 500 includes a main controller 500A including a central processing unit (CPU) 501, a read-only memory (ROM) 502, and a random access memory (RAM) 503. The CPU 501 controls the entire system of the three-dimensional fabrication apparatus 100. The ROM 502 stores programs, which include a program to cause the CPU 501 to perform the control of fabricating a three-dimensional object, and other fixed data. The RAM 503 temporarily stores, for example, fabrication data. The non-volatile random access memory (NVRAM) 504 stores data. An application-specific integrated circuit (ASIC) 505 performs image processing in which various signals are processed on image data and processing of input and output signals for controlling the entire apparatus. An external interface (I/F) 506 sends and receives, for example, data to and from the fabrication data generating apparatus 600.

The fabrication data generating apparatus 600 generates the fabrication data. A data processor such as a personal computer is used as the fabrication data generating apparatus 600. The data processor may be built in the three-dimensional fabrication apparatus 100 or may be separately provided. An input/output (I/O) unit 507 receives signals detected by the sensors 560.

The head drive control unit 508 controls the driving of the head 52.

The motor drivers 510, 511, and 512 drive an X-direction scanning assembly 550, a Z-direction elevating assembly 551, and a Y-direction scanning assembly 552, respectively. The X-direction scanning assembly 550 includes a motor, a pulley, and a belt to move the carriage 51 reciprocally in the X direction. The X direction is the same as the main scanning direction. The Z-direction elevating assembly 551 raises and lowers the liquid discharge unit 50 in the Z direction together with the guides 54 and 55. The Y-direction scanning assembly 552 reciprocally moves the fabrication unit 5 in the Y direction.

A motor driver 513 drives the motor 27 for raising and lowering the supply stage 23. A motor driver 514 drives the motor 28 for raising and lowering the fabrication stage 24. A motor driver 515 drives a motor 553 of the reciprocal moving assembly 25 for moving the flattening unit 12. A motor driver 516 drives the motor 26 for rotationally driving the flattening unit 12. A supply system driver 517 drives the powder supply device 554 for supplying powder 20 to the supply chamber 21. A maintenance driver 518 drives the maintenance mechanism 61.

The head drive control unit 508, the motor drivers 510 to 516, the supply system driver 517, and the maintenance driver 518 of the controller 500 are each constructed of hardware such as a control board. Alternatively, the head drive control unit 508, the motor drivers 510 to 516, the supply system driver 517, and the maintenance driver 518 of the controller 500 may be implemented by software executed by the main controller 500A.

FIGS. 6A to 6F are diagrams each illustrating an operation of fabricating a three-dimensional object by the three-dimensional fabrication apparatus 100 according to the present embodiment. In FIG. 6A, a first fabrication layer 30 has been formed over the fabrication stage 24 of the fabrication chamber 22. When a second fabrication layer 30 is formed on the first fabrication layer 30, the supply stage 23 of the supply chamber 21 is raised in the direction indicated by arrow Z1, and the fabrication stage 24 of the fabrication chamber 22 is lowered in the direction indicated by arrow Z2. At this time, a lowering distance of the fabrication stage 24 is set so that the distance between the upper surface of the powder 20 in the fabrication chamber 22 and the lower end of the flattening unit 12 becomes Δt1. The distance Δt1 corresponds to the thickness of the powder layer 31 to be subsequently formed.

In FIG. 6B, the powder 20 is supplied to the fabrication chamber 22. Specifically, the flattening unit 12 transfers the powder 20 upper than the level of an upper face of the supply chamber 21 in the direction indicated by arrow Y2 in FIG. 6B toward the fabrication chamber 22.

In FIG. 6C, the flattening unit 12 moves parallel to the stage surface of the fabrication stage 24 of the fabrication chamber 22. In FIG. 6D, the powder layer 31 having a predetermined thickness Δt1 has been formed on the fabrication layer 30 over the fabrication stage 24. The flattening unit 12 is movable while maintaining a constant distance from the level of the upper faces of the fabrication chamber 22 and the supply chamber 21. Such a configuration can form the powder layer 31 having a uniform thickness Δt1 over the fabrication stage 24 of the fabrication chamber 22 or on the fabrication layer 30 already formed over the fabrication stage 24 while transferring the powder 20 to an area above the fabrication chamber 22 with the flattening unit 12.

In FIG. 6D, the supply stage 23 of the supply chamber 21 and the fabrication stage 24 of the fabrication chamber 22 are lowered in the direction indicated by arrow Z2 so as to lower the upper surface of the powder 20 in the supply chamber 21 and the upper surface of the powder layer 31 in the fabrication chamber 22. The flattening unit 12 moves in the direction indicated by arrow Y1 in FIG. 6E and returns to the initial position.

In FIG. 6E, the supply stage 23 of the supply chamber 21 and the fabrication stage 24 of the fabrication chamber 22 are raised in the direction indicated by arrow Z1.

In FIG. 6F, the heads 52 of the liquid discharge unit 50 discharges the fabrication liquid 10 to laminate the next fabrication layer 30 in the powder layer 31 (fabrication process). The powder layer 31 is a layer of the powder 20, and the fabrication layer 30 is a layer of the powder 20 to which the fabrication liquid 10 discharged from, for example, the head 52 is applied. These processes are repeated to laminate new fabrication layer 30 on the fabrication layers 30 previously formed. As a result, the fabrication object is formed. The fabrication object (green body) may be sintered to form a three-dimensional object, if desired.

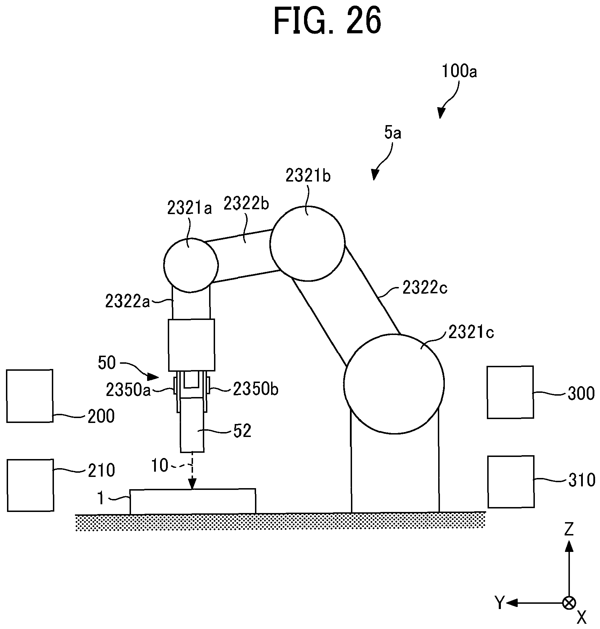

More specifically, the three-dimensional fabrication apparatus 100 may include a heating unit 200 in the fabrication unit 5 or in a housing 80 of the three-dimensional fabrication apparatus 100. The heating unit 200 heats the fabrication object formed of the multiple fabrication layers 30 laminated one on another. The three-dimensional fabrication apparatus 100 may include a removal unit 210 that removes an excess fabrication material (e.g., the powder 20) adhering to the fabrication object heated by the heating unit 200 to obtain a green body. Further, the three-dimensional fabrication apparatus 100 may include a degreasing unit 300 that degreases the green body and a sintering unit 310 that sinters the green body degreased by the degreasing unit 300. Alternatively, a heating apparatus, a removal apparatus, a degreasing apparatus, and a sintering apparatus, which are separated from the three-dimensional fabrication apparatus 100, may be provided instead of the heating unit 200, the removal unit 210, the degreasing unit 300, and the sintering unit 310, respectively. The sintering apparatus may include the degreasing unit 300 and the sintering unit 310. The heating unit 200, the removal unit 210, and the degreasing unit 300 can remove the powder and the fabrication liquid which are excessive for fabrication. As a result, a three-dimensional object can be fabricated with high accuracy. The heating unit 200, the removal unit 210, the degreasing unit 300, and the sintering unit 310 are described later with reference to FIG. 26.

The three-dimensional fabrication apparatus 100 may include the storage hopper 40 that supplies the fabrication material to the fabrication section 1. The storage hopper 40 can supply the fabrication material (e.g., the powder 20) to the supply chamber 21 or the fabrication chamber 22 without disturbance. As a result, a three-dimensional object can be fabricated with high accuracy. The liquid discharge unit 50 may discharge the fabrication liquid 10 to the powder layer 31 by an inkjet method. The fabrication liquid discharged by the inkjet method does not scatteringly land on the powder layer 31. As a result, a three-dimensional object can be fabricated with high accuracy. The sintering unit 310 can increase the density of the laminated powder. As a result, a three-dimensional object can be fabricated with high accuracy.

The powder 20 is not limited to any particular material as long as the material has a form of powder or particles, and can be suitably selected to suit to any application. Examples of the material of the powder 20 include metals, ceramics, carbon, and polymers. From the viewpoint of obtaining a three-dimensional object having high strength, for example, metals and ceramics that can be finally sintered are preferable. The powder 20 may contain additives such as a drying inhibitor, a viscosity modifier, a surfactant, a penetrant, a defoamer, a pH adjuster, a preservative, a colorant, and a stabilizer.

The metal is not limited to any particular metal as long as the material contains a metal. Examples of the metal include a sinter-resistant material such as aluminum (Al), titanium (Ti), copper (Cu), and further includes magnesium (Mg), and vanadium (V), chromium (Cr), manganese (Mn), iron (Fe), cobalt (Co), nickel (Ni), zinc (Zn), yttrium (Y), zirconium (Zr), niobium (Nb), molybdenum (Mo), lead (Pb), silver (Ag), indium (In), tin (Sn), tantalum (Ta), tungsten (W), neodymium (Nd), and alloys of the metals described above. Among these metals, for example, steel use stainless (SUS), iron (Fe), copper (Cu), silver (Ag), titanium (Ti), aluminum (Al), and alloys thereof are preferable. The sinter-resistant material such as aluminum (Al), titanium (Ti), and copper (Cu), and alloys thereof are preferable. Examples of the aluminum alloy include AlSi10Mg, AlSi12, AlSi7Mg0.6, AlSi3Mg, AlSi9Cu3, SCALMALLOY, and ADC12. Each of these materials can be used alone or in combination with others.

Among metals, aluminum (Al) and titanium (Ti) are known as materials that are difficult to handle. Preferably, aluminum (Al) and titanium (Ti) are applied as the metal in the present embodiment.

Examples of the ceramics include oxides, carbides, nitrides, and hydroxides. Examples of the oxides include, but are not limited to, metal oxides. Examples of the metal oxides include silica (SiO₂), alumina (Al₂O₃), zirconia (ZrO₂), and titania (TiO₂). However, the above-described materials are only examples, and the present disclosure is not limited to the examples described above. Each of these materials can be used alone or in combination with others.

Examples of the carbon include graphite, graphene, carbon nanotubes, carbon nanohorns, and fullerene. Each of these materials can be used alone or in combination with others.

### First Embodiment

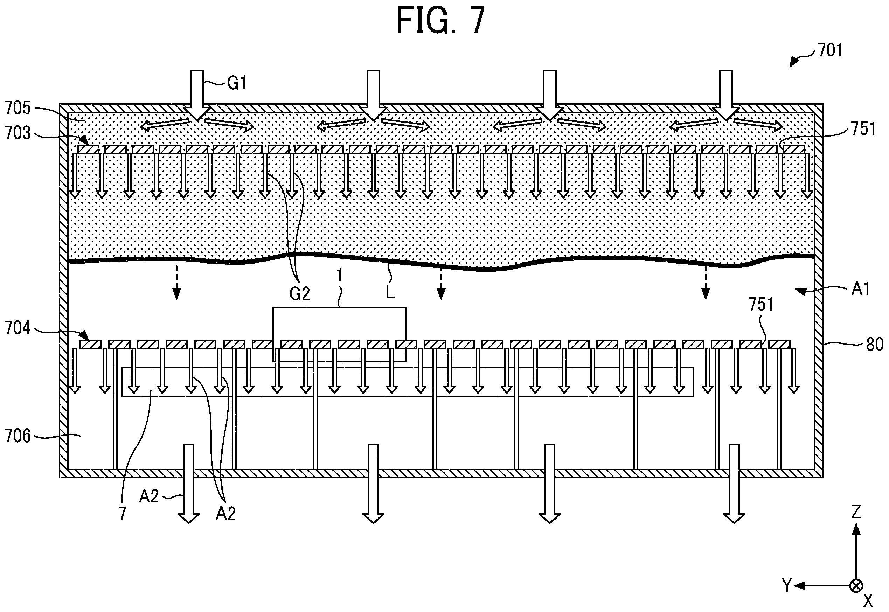

A first embodiment of the present disclosure is described below with reference to FIGS. 7 to 19.

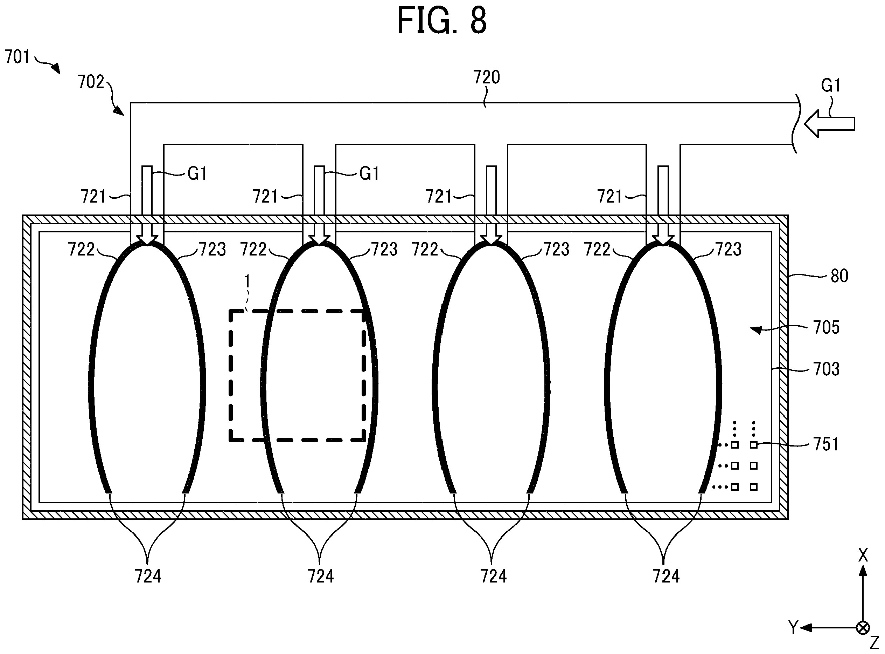

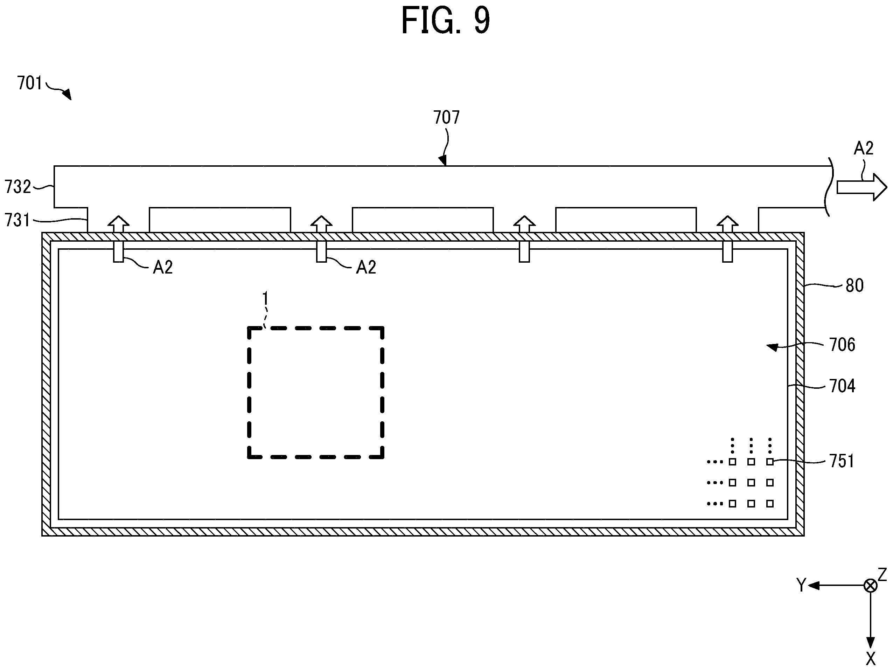

FIG. 7 is a schematic side view of an atmosphere replacement unit 701 as a gas replacer according to the first embodiment of the present disclosure. FIG. 8 is a schematic top view of a gas supply system of the atmosphere replacement unit 701 according to the first embodiment. FIG. 9 is a schematic bottom view of an exhaust system of the atmosphere replacement unit 701 according to the first embodiment.

As illustrated in FIGS. 7 to 9, the three-dimensional fabrication apparatus 100 according to the first embodiment includes the atmosphere replacement unit 701 that replaces an ambient gas in a part of space of the three-dimensional fabrication apparatus 100 from air to a predetermined gas. For example, the atmosphere replacement unit 701 illustrated in FIGS. 7 to 9 encloses the fabrication section 1 in the part of the space. The atmosphere replacement unit 701 separates a space around the fabrication section 1 (i.e., an internal space) from the other space in the three-dimensional fabrication apparatus 100 by, for example, the housing 80.

The oxygen concentration on the surface of the powder 20 in the fabrication section 1 is preferably 8%Vol or less, which is lower than that in air (atmosphere). In the first embodiment, the fabrication section 1 is accommodated in the internal space of the atmosphere replacement unit 701 to replace the ambient gas around the fabrication section 1 from air to the predetermined gas. In the present embodiment, nitrogen (purity: 99%) is used as the predetermined gas (inert gas) with which air is replaced. In the following description, nitrogen is referred to simply as "gas" and is represented by reference signs G1 and G2. The air to be replaced with the gas is represented by reference signs A1 and A2.

The atmosphere replacement unit 701 includes a gas supplier 702, a gas rectifier 703, an air rectifier 704, and an exhaust 707. The gas supplier 702 supplies gas to the part of the space. For example, the gas supplier 702 supplies the gas to the space around the fabrication section 1 (i.e., the internal space).

The gas rectifier 703 is disposed in the internal space. The gas rectifier 703 rectifies the gas, which is supplied into the internal space by the gas supplier 702 and passes through the gas rectifier 703, to supply the gas to the fabrication section 1 (or to the liquid discharge unit 50 in another embodiment).

The air rectifier 704 is disposed in the internal space. The air rectifier 704 rectifies the air, which flows in the internal space and passes through the air rectifier 704, to supply the air to the exhaust 707.

The gas rectifier 703 and the air rectifier 704 are, for example, plate-shaped components, and are disposed against the flow direction of the gas or the air in the internal space. In the present embodiment, a perforated metal is used as the gas rectifier 703 and the air rectifier 704. The perforated metal has a large number of through holes 751. The gas or the air passing through the through holes 751 is rectified to a low-speed laminar flow flowing downstream from the through holes 751.

The exhaust 707 exhausts the air in the internal space.

In the atmosphere replacement unit 701, the gas supplier 702 introduces the gas into the internal space from above the gas rectifier 703, and the exhaust 707 exhausts the air from below the gas rectifier 703 (and the air rectifier 704).

In the present embodiment, the gas supplier 702, the gas rectifier 703, the air rectifier 704, and the exhaust 707 are arranged in this order in the Z direction from top (positive side) to bottom (negative side). The internal space is divided into three spaces in the vertical direction by the gas rectifier 703 and the air rectifier 704 which are the plate-shaped components.

An upper chamber 705 is disposed at the upper end above the gas rectifier 703 in the internal space, and the gas supplier 702 introduces a gas G1 into the upper chamber 705. The gas G1 introduced into the upper chamber 705 passes through the large number of through holes 751 of the perforated metal as the gas rectifier 703 and is rectified into the low-speed laminar flow. As a result, a gas G2 rectified by the gas rectifier 703 flows downward from the gas rectifier 703.

With such a configuration, the atmosphere replacement unit 701 according to the first embodiment causes the gas G2 introduced into the internal space to flow downward. The gas used in this configuration preferably has a specific gravity smaller than that of an air A1, such as nitrogen, helium, and neon.

The rectified gas G2 is the low-speed laminar flow that moves downward while keeping a boundary layer L between the gas G2 and the air A1 remaining in the internal space. Thus, the atmosphere replacement unit 701 can quickly replace the ambient gas around the fabrication section 1 in the internal space from air to gas.

A lower chamber 706 is disposed at the lower end below the air rectifier 704 in the internal space. The air A1 in the internal space pushed downward by the gas G2 passes through the large number of through holes 751 of the perforated metal as the air rectifier 704 and is rectified to the low-speed laminar flow. As a result, an air A2 rectified by the air rectifier 704 is introduced into the lower chamber 706. The exhaust 707 is disposed in the lower chamber 706 and exhausts the rectified air A2 introduced into the lower chamber 706 to the outside.

An exhaust system may not include the air rectifier 704 and the lower chamber 706, and the air A1 in the internal space, which is pushed downward by the gas G2, may be directly exhausted from the exhaust 707.

The gas supplier 702 according to the present embodiment is described below with reference to FIG. 8. Nitrogen generated by, for example, a nitrogen generator or nitrogen in a nitrogen cylinder is introduced into the internal space of the atmosphere replacement unit 701 by the gas supplier 702.

The gas supplier 702 includes a pipe 720 for introducing the gas G1 from the outside and multiple introduction pipes 721 for introducing the gas G1 from the pipe 720 into the upper chamber 705. For example, the gas G1 is introduced at a supply pressure of 0.3 MPa(G) and a flow rate of 100 L/min.

The gas with a flow rate of 200 L/min flowing through the gas supplier 702 can shorten a gas replacement time. However, a too-large flow rate may damage the boundary layer L. The gas with the high supply pressure flowing through the gas supplier 702 can shorten the gas replacement time. However, the high supply pressure increases the pressure applied to the pipe 720 and may cause gas leakage.

The introduction pipe 721 is divided into, for example, two divided pipes 722 and 723 in the upper chamber 705. The divided pipes 722 and 723 have holes having a diameter of about 0.5 mm on the surfaces thereof, and the gas G1 such as nitrogen is blown out from the holes into the upper chamber 705. Tips 724 of the divided pipes 722 and 723 are sealed to stop the gas G1.

The exhaust 707 according to the present embodiment is described below with reference to FIG. 9. The exhaust 707 includes multiple ducts 731 and a collection duct 732.

The air A2 (including the gas G2 in some cases) that has passed through the perforated metal of the air rectifier 704 is exhausted from the lower chamber 706 to the multiple (four in FIG. 9) ducts 731. The multiple ducts 731 are attached to, for example, the rear face or the lower face of the housing 80 of the atmosphere replacement unit 701. The multiple ducts 731 are connected to the collection duct 732, and the air A2 is exhausted from the collection duct 732 to the outside (e.g., a duct installed in a building).

In the present embodiment, the exhaust 707 includes the multiple ducts 731 at multiple positions to exhaust the air A2 evenly. As a result, the boundary layer L between the gas G2 and the air A1 can be prevented from being damaged.

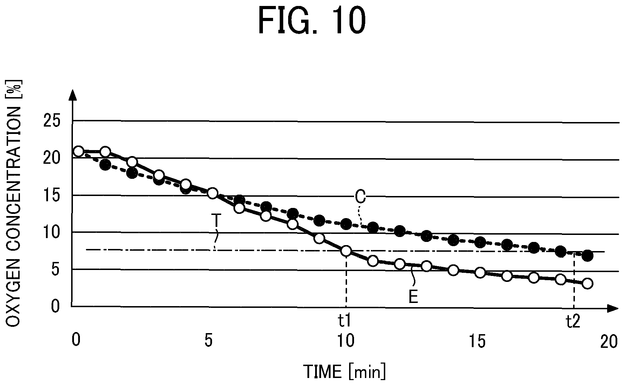

FIG. 10 is a graph illustrating an effect of the atmosphere replacement unit 701 according to the present embodiment. FIG. 10 illustrates changes in oxygen concentration when the ambient gas around the fabrication section 1 is replaced from air to gas. In FIG. 10, the horizontal axis represents time (min) and the vertical axis represents oxygen concentration (%). A graph E indicated by a bold solid line in FIG. 10 corresponds to the change according to the present embodiment in which the atmosphere replacement unit 701 is applied. On the other hand, a graph C indicated by a bold dotted line in FIG. 10 corresponds to the change according to a comparative example in which the gas is directly introduced to the surrounding of the fabrication section 1 by, for example, a pipe without the atmosphere replacement unit 701 according to the present embodiment to replace the ambient gas.

In the graph of FIG. 10, the oxygen concentration is preferably reduced to 8%Vol or less by supplying nitrogen. A threshold line T at the oxygen concentration of 8%Vol is indicated by a thin dashed-dotted line in FIG. 10.

In the graph C according to the comparative example, the boundary layer L between gas and air is not kept, and the ambient gas is gradually replaced from air to gas while the gas and the air are mixed. Accordingly, a time t2 until the oxygen concentration reaches the desired threshold line is relatively long in the comparative example. On the other hand, in the graph E according to the present embodiment, a time t1 until the oxygen concentration reaches the desired threshold line is about half the time t2 according to the comparative example to replace the ambient gas from air to gas. In other words, the ambient gas can be replaced in a short time and with a small amount of nitrogen in the present embodiment (since nitrogen is supplied at the same flow rate, the amount of nitrogen increases in proportion to time).

A method of determining whether the boundary layer L between the gas G2 and the air A1 is kept according to the present embodiment is described below.

In the following description, the ambient gas is replaced from air (i.e., the atmosphere) to gas (i.e., nitrogen) to reduce the oxygen concentration below a desired level. The oxygen concentration of the atmosphere is about 20%.

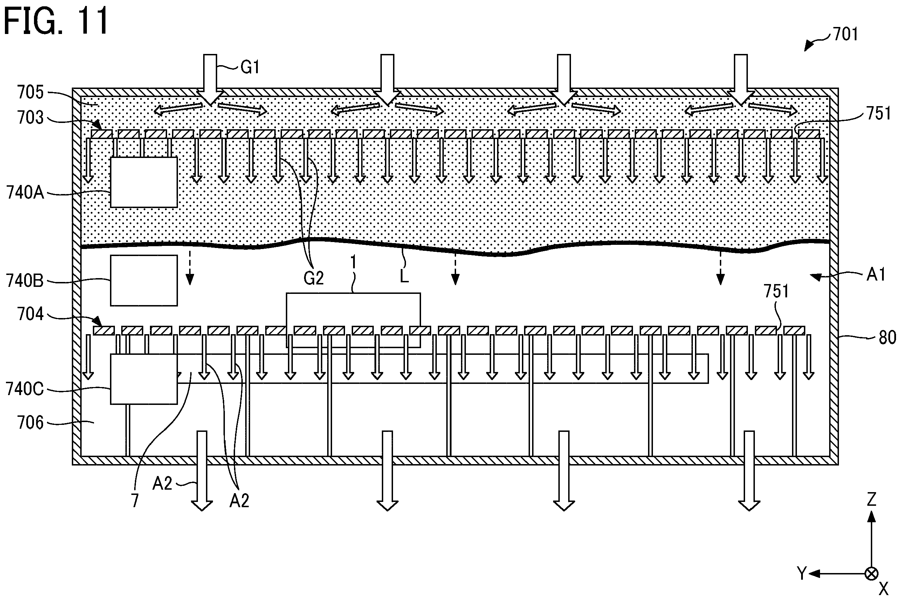

As illustrated in FIG. 11, three oxygen concentration meters 740A, 740B, and 740C are installed inside the atmosphere replacement unit 701. FIG. 11 is a diagram illustrating the installation positions of the oxygen concentration meters 740A, 740B, and 740C in the atmosphere replacement unit 701 according to the present embodiment. The outline of the configuration of the atmosphere replacement unit 701 illustrated in FIG. 11 is the same as that of FIG. 7.

As illustrated in FIG. 11, the three oxygen concentration meters 740A, 740B, and 740C are arranged so as to be closer to the nitrogen supply portion (i.e., the gas rectifier 703 in FIG. 11) in this order. In other words, the three oxygen concentration meters 740A, 740B, and 740C are arranged in this order in the Z direction from top (positive side) to bottom (negative side) inside the atmosphere replacement unit 701. The oxygen concentration meter 740A is closer to the gas rectifier 703 than to the air rectifier 704 between the gas rectifier 703 and the air rectifier 704. The oxygen concentration meter 740B is closer to the air rectifier 704 than to the gas rectifier 703 between the gas rectifier 703 and the air rectifier 704. The oxygen concentration meter 740C is disposed in the lower chamber 706 below the air rectifier 704.

Nitrogen is supplied by a predetermined method (e.g., the procedure described with reference to FIG. 7). At this time, the changes in the values of the oxygen concentration meters 740A, 740B, and 740C are recorded to determine whether or not the boundary layer L is formed. For example, the controller 500 of the three-dimensional fabrication apparatus 100 can determine whether or not the boundary layer L is formed.

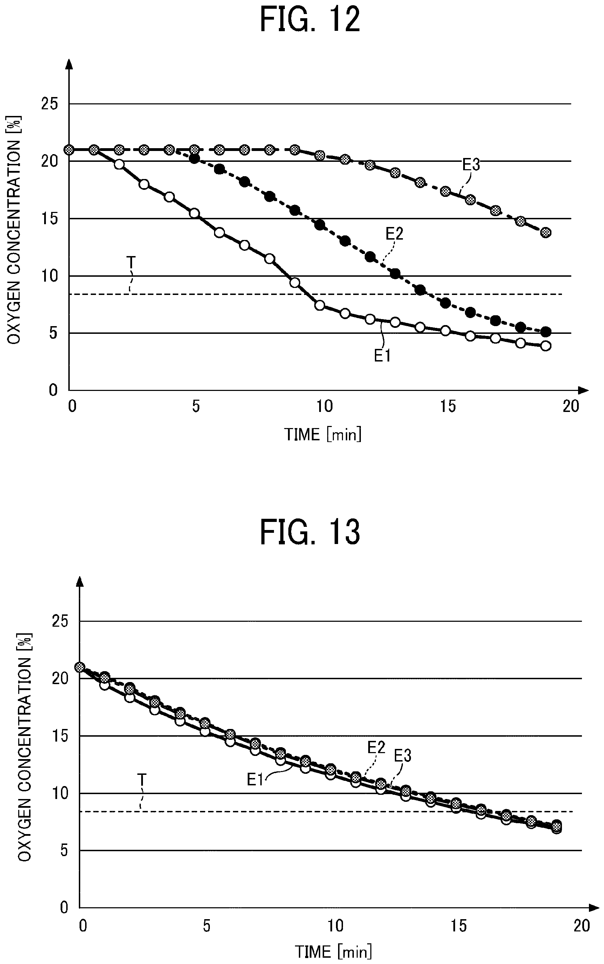

FIG. 12 is a diagram illustrating the changes in the values of the respective oxygen concentration meters 740A, 740B, and 740C when the boundary layer L is formed. In FIG. 12, the changes in the oxygen concentrations measured by the oxygen concentration meters 740A, 740B, and 740C respectively correspond to a graph E1 indicated by a bold solid line, a graph E2 indicated by a bold dotted line, and a graph E3 indicated by a bold dotted-dashed line. In FIG. 12, the threshold line T at the oxygen concentration of 8%Vol is indicated by a thin dashed line. As illustrated in FIG. 12, when the oxygen concentration decreases from the position closer to the nitrogen supply portion, i.e., when the oxygen concentration starts decreasing in the order of the oxygen concentration meter 740A, the oxygen concentration meter 740B, and the oxygen concentration meter 740C, the controller 500 can determine that the boundary layer L is formed.

FIG. 13 is a diagram illustrating the changes in the values of the respective oxygen concentration meters 740A, 740B, and 740C when the boundary layer L is not formed. Graphs E1, E2, and E3 and the threshold line T in FIG. 13 are similar to those in FIG. 12. As illustrated in FIG. 13, when the changes in the values of the respective oxygen concentration meters 740A, 740B, and 740C overlap, the controller 500 can determine that the boundary layer L is not formed.

The changes in the oxygen concentrations measured by the respective oxygen concentration meters 740A, 740B, and 740C when the boundary layer L is not formed is not limited to the graphs E1, E2, and E3 illustrated in FIG. 13. For example, the change in the value of the oxygen concentration meter 740A may be plotted above the change in the value of the oxygen concentration meter 740C in the graph of FIG. 13, i.e., the value of the oxygen concentration meter 740C may start decreasing at an earlier timing than the value of the oxygen concentration meter 740A.

In another method, dry ice as a dummy gas that flows in the atmosphere replacement unit 701 can visualize the boundary layer L. The boundary layer L does not have a clear boundary, but behaves as if the boundary is formed.

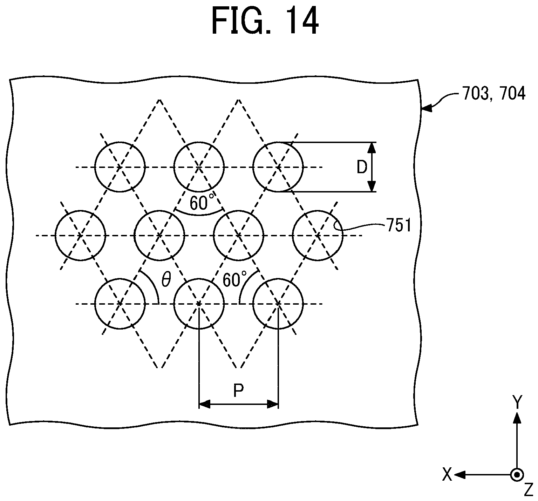

FIG. 14 is a plan view of the gas rectifier 703 and the air rectifier 704 according to an embodiment of the present disclosure. In the present embodiment, the perforated metal is used as the gas rectifier 703 and the air rectifier 704.

The perforated metal preferably has a thickness of 1 to 5 mm in the Z direction and the opening ratio of the through holes 751 to the area of the surface of the perforated metal of 5 to 50%. The opening of the through holes 751 has a diameter of 0.1 to 5 mm.

The perforated metal according to the present embodiment is illustrated in FIG. 14 and has a thickness of 1.5 mm. The through holes 751 have a diameter D of 5 mm and are arranged at a pitch P of 14 mm and an angle θ formed between the centers of the through holes 751 of 60°.

As the material of the perforated metal, a metal material such as steel plates, plated steel plates, colored steel plates, stainless steel plates, aluminum plates, or titanium plates is preferable. Specific examples of the material include structural steel (SS) plates, steel plate cold commercial-standard temper grade, dull finish (SPCC-SD) plates, steel plate hot commercial-pickling (SPHC-P) plates, steel galvanized cold commercial (SGCC) plates, steel galvanized hot commercial (SGHC) plates, high-tensile steel plates, steel use stainless (SUS) plates, aluminum plates (ALP), surface-treated steel plates, galvanized steel plates, electroplated steel plates (bonderized steel plates), steel electrolytic cold commercial (SECC) plates, steel electrolytic hot commercial (SEHC) plates, hot-dip galvanized steel (Zinc, SGCC, SGHC) plates, aluminum-coated steel plates (ALSTAR), colored steel plates, brass plates, copper plates, titanium plates (Tip), polyvinyl chloride (PVC) plates, and carbon fiber reinforced thermoplastics (CFRTP) plates.

When the perforated metal is not thick, the perforated metal may be disposed on a reinforcement structure. Such a configuration can achieve both the rectification effect and the strength. The perforated metal may be divided into small pieces to be spread in the atmosphere replacement unit 701. Such a configuration can enhance the assemblability. Two or more perforated metals may be stacked one on another. Such a configuration can enhance the rectification effect.

Any component other than the perforated metal, which can rectify gas and air passing therethrough, can be used as the gas rectifier 703 and the air rectifier 704. For example, a porous resin plate may be used as the gas rectifier 703 and the air rectifier 704. The porous resin plate may be a continuous porous body formed of sintered uniform plastic powder such as polyethylene or polypropylene. The effect of the porous resin plate is that a stable laminar flow can be formed due to the fine porous structure.

Alternatively, a porous metal plate may be used as the gas rectifier 703 and the air rectifier 704. Examples of the porous metal plate include continuous porous bodies formed of sintered powder of metal, such as bronze (BC), stainless steel (e.g., SUS304 and SUS316L), iron (Fe), aluminum (Al), copper (Cu), nickel (Ni), INNCONEL, titanium (Ti), titanium dioxide (TiO₂), molybdenum (Mo), tungsten (W), tantalum (Ta), and zirconium boride (ZrB₂).

A microporous plate may also be used as the gas rectifier 703 and the air rectifier 704. The microporous plate is an ultrathin sheet of, for example, stainless steel, nickel, or aluminum having a thickness of about 0.03 to 3 mm, in which innumerable micropores and through holes having a diameter of about 5 µm to 2 mm are uniformly formed. The microporous plate is manufactured by, for example, etching, electroforming, electronic beam perforation (EBP), laser, drilling, and electrical discharge machining. When the microporous plate is used, since the plate thickness is thin, the microporous plate is laid on a structure separately provided.

The three-dimensional fabrication apparatus 100 according to the first embodiment includes the atmosphere replacement unit 701 that replaces the ambient gas in the space around the fabrication section 1 from the air A1 to the predetermined gas G2 before fabrication. The atmosphere replacement unit 701 replaces the air A1 with the predetermined gas G2 while keeping the boundary layer L between the predetermined gas G2 and the air A1 in the space around the fabrication section 1.

With this configuration, the three-dimensional fabrication apparatus 100 according to the first embodiment can efficiently utilize the gas. When an inert gas is used as the predetermined gas G2, the ambient gas in the space around the fabrication section 1 is replaced with the inert gas, and thus the oxygen concentration in the ambient gas can be reduced. Further, since the air A1 is replaced with the gas G2 while the boundary layer L between the gas G2 and the air A1 is kept, the dust deposited in the atmosphere replacement unit 701 can be prevented from being blown up during the gas replacement, and thus atmosphere replacement unit 701 can be filled with the gas G2 in a short time and with a small amount of the gas G2. As a result, the three-dimensional fabrication apparatus 100 according to the first embodiment can shorten the time for the replacement of the ambient gas from the air A1 to the inert gas G2 in the space in which the powder layer 31 and the fabrication layer 30 are formed.

In the three-dimensional fabrication apparatus 100 according to the first embodiment, the atmosphere replacement unit 701 includes the gas supplier 702, the gas rectifier 703, and the exhaust 707. The gas supplier 702 supplies the predetermined gas G1 to the space around the fabrication section 1. The gas rectifier 703 is installed in the space. The gas rectifier 703 rectifies the predetermined gas G1, which is supplied by the gas supplier 702, passing through the gas rectifier 703 and supplies the rectified gas G2 to the fabrication section 1. The exhaust 707 exhausts the air A1 in the space.

With this configuration, the gas G1 introduced by the gas supplier 702 is not directly fed to the space around the fabrication section 1, but is once rectified to the gas G2 by the gas rectifier 703. Thus, the gas G2 which is the low-speed laminar flow can be fed to the fabrication section 1. Such a configuration can more reliably perform the gas replacement while keeping the boundary layer L between the gas G2 and the air A1, and thus can more reliably shorten the time for the gas replacement.

In the three-dimensional fabrication apparatus 100 according to the first embodiment, the atmosphere replacement unit 701 includes the air rectifier 704 installed in the space around the fabrication section 1. The air rectifier 704 rectifies the air A1 passing through the air rectifier 704 in the space and supplies the rectified air A2 to the exhaust 707.

With this configuration, when the gas replacement is performed, the air A1 in the space around the fabrication section 1 is not directly fed to the exhaust 707, but is once rectified to the air A2 by the air rectifier 704. Thus, the air A2 which is the low-speed laminar flow can be fed to the exhaust 707. Such a configuration can prevent the air A1 in the space around the fabrication section 1 from being abruptly exhausted, and thus the boundary layer L between the gas G2 and the air A1 can be kept more reliably. Further, since the dust deposited in the atmosphere replacement unit 701 can be more reliably prevented from being blown up during the gas replacement.

The gas rectifier 703 and the air rectifier 704 formed of the perforated metal can achieve the rectification effect at low cost.

In the three-dimensional fabrication apparatus 100 according to the first embodiment, the gas supplier 702 introduces the predetermined gas G1 into the space around the fabrication section 1 from above the gas rectifier 703, and the exhaust 707 exhausts the air A2 from below the gas rectifier 703 (and the air rectifier 704).

With this configuration, in particular, when a gas lighter than air is used, the air (i.e., the ambient gas) in the space around the fabrication section 1 can be efficiently replaced with the gas. The predetermined gas preferably includes any one of nitrogen, helium, and neon.

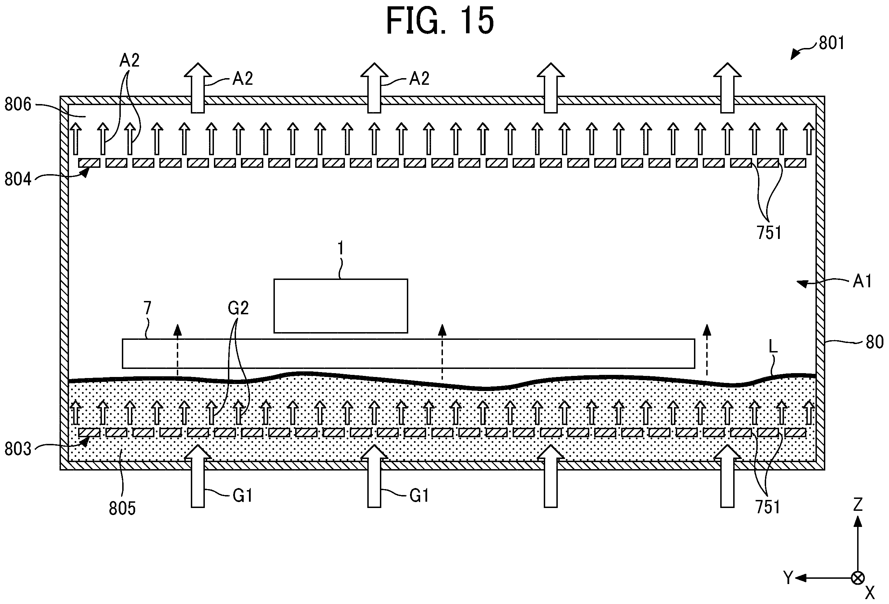

FIG. 15 is a schematic side view of an atmosphere replacement unit 801 as a gas replacer according to a first modification of the first embodiment of the present disclosure. The atmosphere replacement unit 801 according to the first modification is different from the atmosphere replacement unit 701 in that the gas G2 introduced into the internal space flows upward. The gas used in this configuration preferably has a specific gravity greater than that of the air A1, such as argon and carbon dioxide.

The atmosphere replacement unit 801 includes components similar to the gas supplier 702 (see FIG. 8) and the exhaust 707 (see FIG. 9) of the atmosphere replacement unit 701. The atmosphere replacement unit 801 further includes a lower chamber 805, a gas rectifier 803, an air rectifier 804, and an upper chamber 806 having functions similar to those of the upper chamber 705, the gas rectifier 703, the air rectifier 704, and the lower chamber 706 of the atmosphere replacement unit 701, respectively.

A gas supplier of the atmosphere replacement unit 801 introduces the gas G1 into the internal space from below the gas rectifier 803, and an exhaust of the atmosphere replacement unit 801 exhausts the air A2 from above the gas rectifier 803 (and the air rectifier 704).

The gas G1 is introduced into the lower chamber 805. Pipes in the lower chamber 805 may have a configuration similar to that illustrated in FIG. 8. The gas G1 in the lower chamber 805 passes through the large number of through holes 751 of the perforated metal as the gas rectifier 803 and is rectified into the low-speed laminar flow. As a result, the gas G2 rectified by the gas rectifier 803 flows upward from the gas rectifier 803.

The rectified gas G2 is the low-speed laminar flow that moves upward while keeping the boundary layer L between the gas G2 and the air A1 remaining in the internal space. Thus, the atmosphere replacement unit 701 can quickly replace the ambient gas around the fabrication section 1 in the internal space from air to gas.

The air A1 in the internal space pushed upward by the gas G2 passes through the large number of through holes 751 of the perforated metal as the air rectifier 804 and is rectified to the low-speed laminar flow. As a result, the air A2 rectified by the air rectifier 704 is introduced into the upper chamber 806. The exhaust is disposed in the upper chamber 806. The exhaust may have a configuration similar to that illustrated in FIG. 9. The rectified air A2 introduced into the upper chamber 806 is exhausted to the outside from the exhaust.

In the atmosphere replacement unit 801 according to the first modification of the first embodiment, the gas supplier introduces the predetermined gas G1 into the space around the fabrication section 1 from below the gas rectifier 803, and the exhaust exhausts the air A2 from above the gas rectifier 803 (and the air rectifier 804).

With this configuration, in particular, when a gas heavier than air is used, the air (i.e., the ambient gas) in the space around the fabrication section 1 can be efficiently replaced with the gas. The predetermined gas preferably includes any one of argon and carbon dioxide.

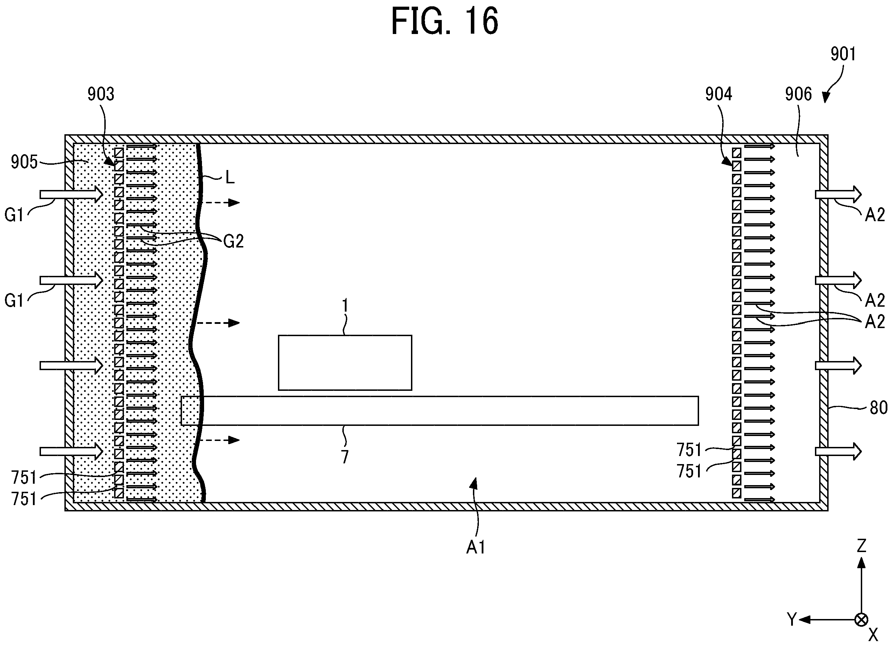

FIG. 16 is a schematic side view of an atmosphere replacement unit 901 as a gas replacer according to a second modification of the first embodiment of the present disclosure. The atmosphere replacement unit 901 according to the second modification is different from the atmosphere replacement unit 701 in that the gas G2 introduced into the internal space flows in the horizontal direction (in the negative Y direction in FIG. 16). For example, when the ambient gas is replaced with dry air (humidity of 20%RH or less), the atmosphere replacement unit 901 according to the second modification is preferably used. The atmosphere replacement unit 901 is effective when the humidity affects the fabrication quality.

The atmosphere replacement unit 901 includes components similar to the gas supplier 702 (see FIG. 8) and the exhaust 707 (see FIG. 9) of the atmosphere replacement unit 701. The atmosphere replacement unit 901 includes an upstream chamber 905, a gas rectifier 903, an air rectifier 904, and a downstream chamber 906 having functions similar to those of the upper chamber 705, the gas rectifier 703, the air rectifier 704, and the lower chamber 706 of the atmosphere replacement unit 701, respectively.

A gas supplier of the atmosphere replacement unit 901, the upstream chamber 905, the gas rectifier 903, the air rectifier 904, the downstream chamber 906, and an exhaust of the atmosphere replacement unit 901 are arranged in the horizontal direction, and the predetermined gas G2 flows in the horizontal direction in the internal space.

The gas G1 is introduced into the upstream chamber 905. Pipes in the upstream chamber 905 may have a configuration similar to that illustrated in FIG. 8. The gas G1 in the upstream chamber 905 passes through the large number of through holes 751 of the perforated metal as the gas rectifier 903 and is rectified into the low-speed laminar flow. As a result, the gas G2 rectified by the gas rectifier 903 flows in the negative Y direction from the gas rectifier 903.

The rectified gas G2 is the low-speed laminar flow that moves in the negative Y direction while keeping the boundary layer L between the gas G2 and the air A1 remaining in the internal space. Thus, the atmosphere replacement unit 701 can quickly replace the ambient gas around the fabrication section 1 in the internal space from air to gas.

The air A1 in the internal space pushed in the negative Y direction by the gas G2 passes through the large number of through holes 751 of the perforated metal as the air rectifier 904 and is rectified to the low-speed laminar flow. As a result, the air A2 rectified by the air rectifier 904 is introduced into the downstream chamber 906. The exhaust is disposed in the downstream chamber 906. The exhaust may have a configuration similar to that illustrated in FIG. 9. The rectified air A2 introduced into the downstream chamber 906 is exhausted to the outside from the exhaust.

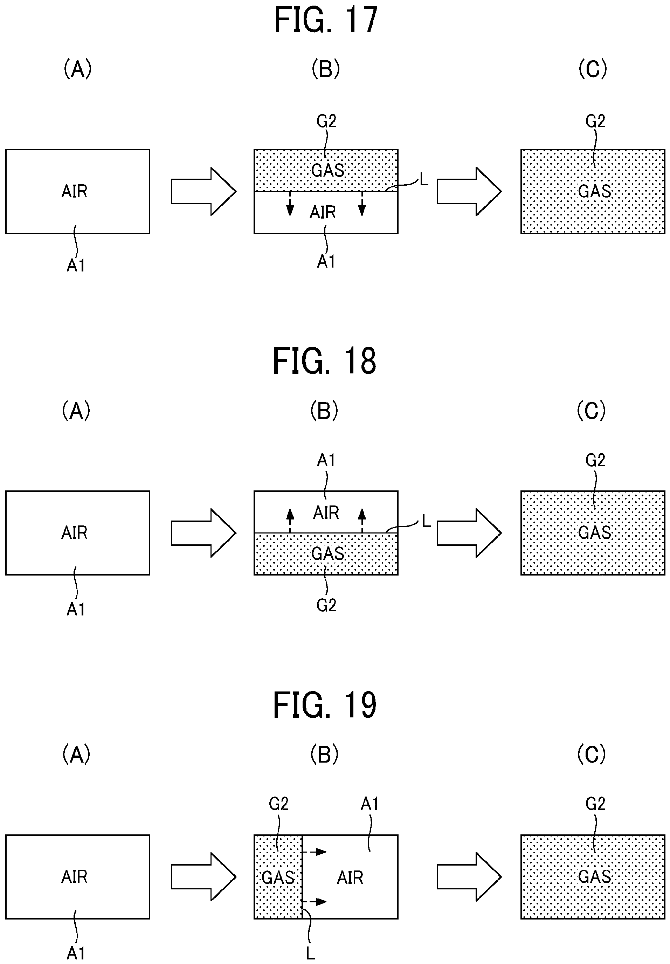

FIG. 17 is a diagram illustrating the process of gas replacement by the atmosphere replacement unit 701 according to the first embodiment of the present disclosure. Portions (A) to (C) of FIG. 17 schematically illustrate the ambient gas in the internal space of the atmosphere replacement unit 701 in each stage of the gas replacement.

In an initial state illustrated in the portion (A) of FIG. 17, the internal space is filled with the air A1. When the atmosphere replacement unit 701 starts the gas replacement, as illustrated in the portion (B) of FIG. 17, the gas G2 enters the internal space from above and pushes the air A1 downward. At this time, the boundary layer L between the gas G2 and the air A1 is formed, and the gas G2 and the air A1 flow downward while the boundary layer L is kept. Then, the internal space is filled with the gas G2 in a final state illustrated in the portion (C) of FIG. 17.

FIG. 18 is a diagram illustrating the process of gas replacement by the atmosphere replacement unit 801 according to the first modification of the first embodiment of the present disclosure. The outline of each of portions (A) to (C) of FIG. 18 is similar to that of each of the portions (A) to (C) of FIG. 17.

In an initial state illustrated in the portion (A) of FIG. 18, the internal space is filled with the air A1. When the atmosphere replacement unit 801 starts the gas replacement, as illustrated in the portion (B) of FIG. 18, the gas G2 enters the internal space from below and pushes the air A1 upward. At this time, the boundary layer L between the gas G2 and the air A1 is formed, and the gas G2 and the air A1 flow upward while the boundary layer L is kept. Then, the internal space is filled with the gas G2 in a final state illustrated in the portion (C) of FIG. 18.

FIG. 19 is a diagram illustrating the process of gas replacement by the atmosphere replacement unit 901 according to the second modification of the first embodiment of the present disclosure. The outline of each of portions (A) to (C) of FIG. 19 is similar to that of each of the portions (A) to (C) of FIG. 17.

In an initial state illustrated in the portion (A) of FIG. 19, the internal space is filled with the air A1. When the atmosphere replacement unit 901 starts the gas replacement, as illustrated in the portion (B) of FIG. 19, the gas G2 enters the internal space from the left in FIG. 19 and pushes the air A1 to the right in FIG. 19. At this time, the boundary layer L between the gas G2 and the air A1 is formed, and the gas G2 and the air A1 flow to the right in FIG. 19 while the boundary layer L is kept. Then, the internal space is filled with the gas G2 in a final state illustrated in the portion (C) of FIG. 19.

As illustrated in FIGS. 17 to 19, the boundary layer L between the gas and the air can be kept in the process of gas replacement by the atmosphere replacement unit 701, 801, or 901 according to the first embodiment, and thus the gas replacement can be performed in a short time and with a minimum amount of the gas. On the other hand, for example, when a large amount of gas is introduced into the internal space at a time, the boundary layer L may not be kept and may be damaged. When the boundary layer L is damaged, the gas turbulently flows and is mixed with the air, and the gas mixed with the air is also exhausted together with the air during the gas replacement. As a result, the amount of gas for the gas replacement increases with the amount of the gas mixed with the air, and the time for the gas replacement also increases.

### Second Embodiment

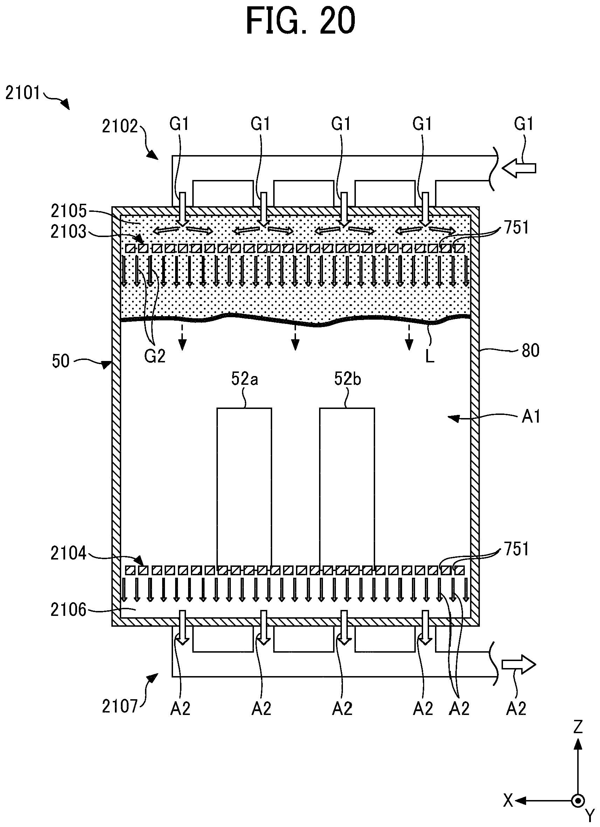

A second embodiment of the present disclosure is described below with reference to FIGS. 20 to 24. FIG. 20 is a schematic side view of an atmosphere replacement unit 2101 as a gas replacer of the three-dimensional fabrication apparatus 100 according to the second embodiment of the present disclosure.

As illustrated in FIG. 20, the three-dimensional fabrication apparatus 100 according to the second embodiment includes the atmosphere replacement unit 2101 that replaces an ambient gas in a part of space of the three-dimensional fabrication apparatus 100 from air to a predetermined gas. The atmosphere replacement unit 2101 illustrated in FIG. 20 encloses the liquid discharge heads 52a and 52b of the liquid discharge unit 50 in the part of the space. The atmosphere replacement unit 2101 separates a space around the liquid discharge heads 52a and 52b (i.e., an internal space) from the other space in the three-dimensional fabrication apparatus 100 by, for example, a housing 80 of the liquid discharge unit 50. The atmosphere replacement unit 2101 may enclose the outside of the liquid discharge unit 50 by another housing and replace the ambient gas around the entire liquid discharge unit 50 with gas.

The atmosphere replacement unit 2101 includes a gas supplier 2102, an upper chamber 2105, a gas rectifier 2103, an air rectifier 2104, a lower chamber 2106, and an exhaust 2107 having functions similar to those of the gas supplier 702, the upper chamber 705, the gas rectifier 703, the air rectifier 704, the lower chamber 706, and the exhaust 707 of the atmosphere replacement unit 701, respectively. The upper face of the air rectifier 2104 is disposed at the same position as the nozzle faces of the liquid discharge heads 52a and 52b of the liquid discharge unit 50.

The gas supplier 2102 introduces the gas G1 into the upper chamber 2105 in the liquid discharge unit 50. Pipes in the upper chamber 2105 may have a configuration similar to that illustrated in FIG. 8. The gas G1 in the upper chamber 2105 passes through the large number of through holes 751 of the perforated metal as the gas rectifier 2103 and is rectified into the low-speed laminar flow. As a result, the gas G2 rectified by the gas rectifier 2103 flows downward from the gas rectifier 2103.

The rectified gas G2 is the low-speed laminar flow that moves downward while keeping the boundary layer L between the gas G2 and the air A1 remaining in the liquid discharge unit 50. Thus, the atmosphere replacement unit 2101 can quickly replace the ambient gas around the liquid discharge heads 52a and 52b in the internal space of the liquid discharge unit 50 from air to gas.

The air A1 in the internal space pushed downward by the gas G2 passes through the large number of through holes 751 of the perforated metal as the air rectifier 2104 and is rectified to the low-speed laminar flow. As a result, the air A2 rectified by the air rectifier 2104 is introduced into the lower chamber 2106. The rectified air A2 introduced into the lower chamber 2106 is exhausted to the outside from the exhaust 2107.

The process of gas replacement by the atmosphere replacement unit 2101 according to the second embodiment is similar to the process of gas replacement by the atmosphere replacement unit 701 according to the first embodiment described above with reference to FIG. 17.

The three-dimensional fabrication apparatus 100 according to the second embodiment includes the atmosphere replacement unit 2101 that replaces the ambient gas in the space around the liquid discharge unit 50 from the air A1 to the gas G2 before fabrication. The atmosphere replacement unit 2101 performs the gas replacement while keeping the boundary layer L between the gas G2 and the air A1 in the space around the liquid discharge unit 50.

The effect of the atmosphere replacement unit 2101 according to the second embodiment is that the time for the gas replacement can be shortened similarly to the first embodiment and, in addition, that powder can be prevented from entering the liquid discharge unit 50 by the gas exhausted from the inside of the liquid discharge unit 50. For this reason, the air rectifier 2104 is disposed on the bottom face of the liquid discharge unit 50.

The atmosphere replacement unit 2101 according to the second embodiment includes the gas supplier 2102, the upper chamber 2105, the gas rectifier 2103, the air rectifier 2104, the lower chamber 2106, and the exhaust 2107 having functions similar to those of the gas supplier 702, the upper chamber 705, the gas rectifier 703, the air rectifier 704, the lower chamber 706, and the exhaust 707 of the atmosphere replacement unit 701, respectively. Thus, the atmosphere replacement unit 2101 according to the second embodiment can also achieve effects similar to those of the respective components according to the first embodiment.

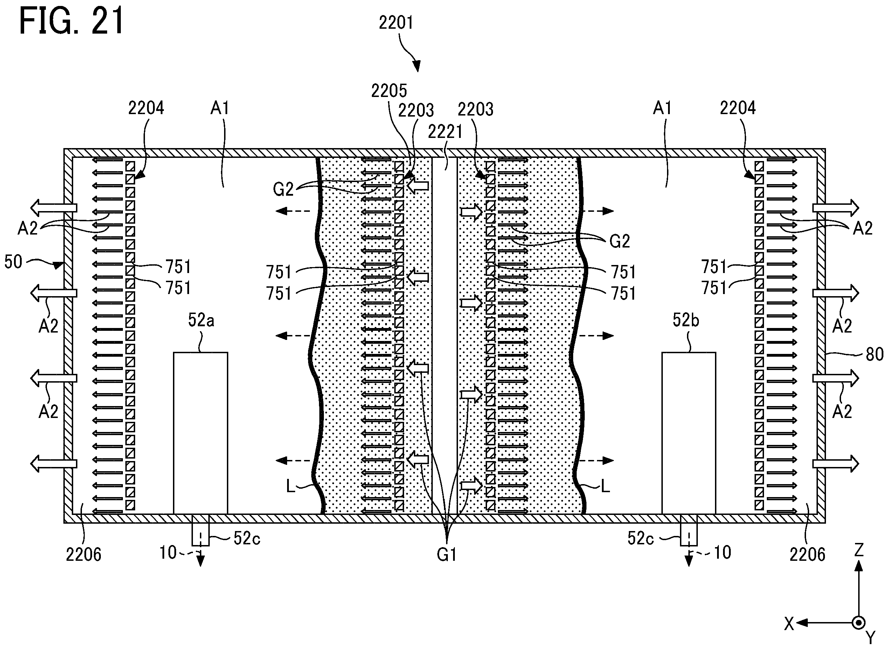

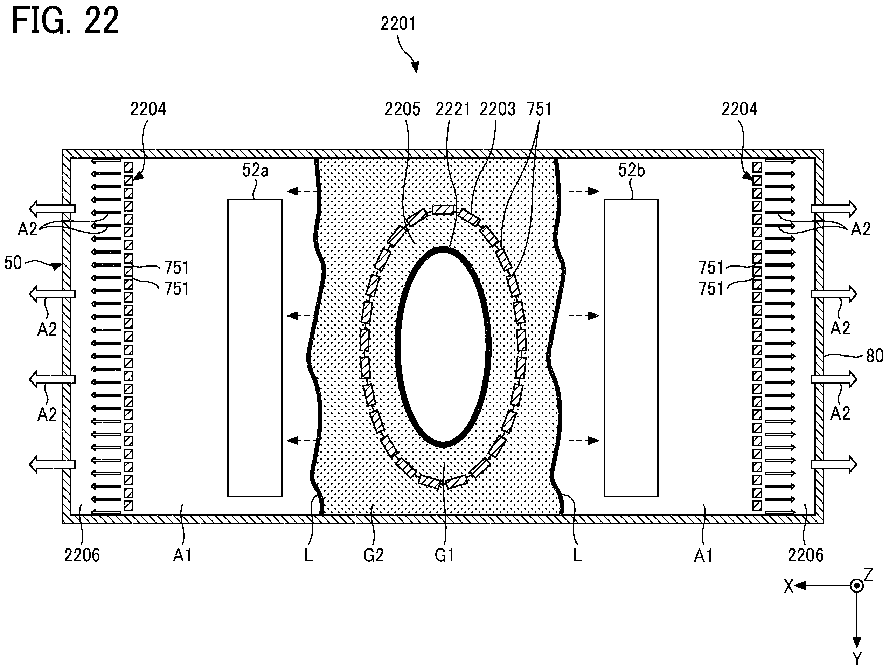

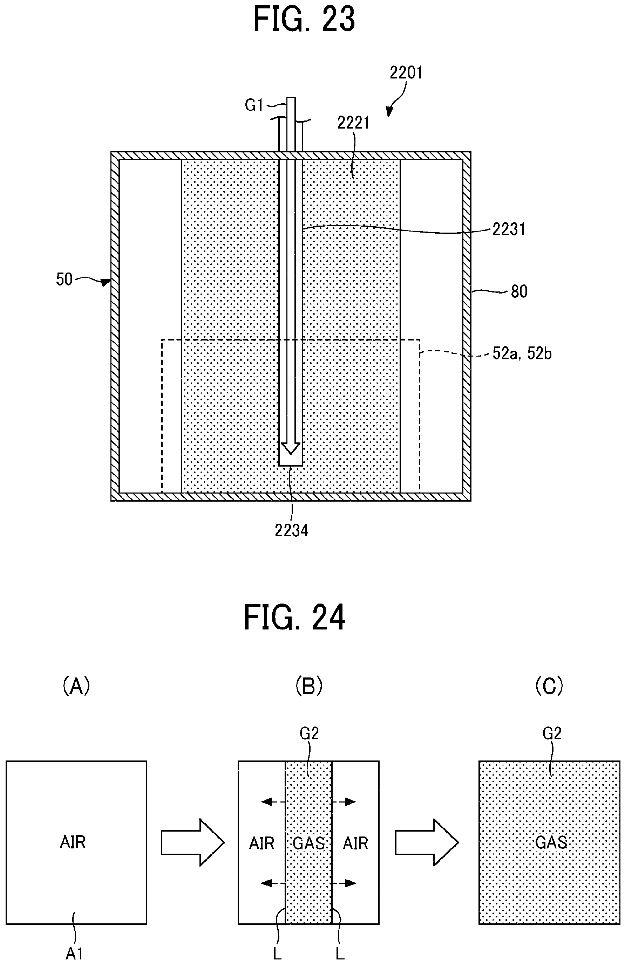

FIG. 21 is a schematic side view (as viewed in the Y direction) of an atmosphere replacement unit 2201 as a gas replacer according to a modification of the second embodiment of the present disclosure. FIG. 22 is a schematic top view of the atmosphere replacement unit 2201 according to the modification of the second embodiment of the present disclosure. FIG. 23 is a schematic side view (as viewed in the X direction) of the atmosphere replacement unit 2201 according to the modification of the second embodiment of the present disclosure.

The atmosphere replacement unit 2201 according to the modification of the second embodiment is different from the atmosphere replacement unit 2101 in that the gas G2 introduced into the internal space flows in the horizontal direction (in the positive and negative X directions in FIGS. 21 and 22).

The atmosphere replacement unit 2201 includes components similar to the gas supplier 2102 and the exhaust 2107 of the atmosphere replacement unit 2101. The atmosphere replacement unit 2201 further includes a central chamber 2205, a gas rectifier 2203, air rectifiers 2204, and outer chambers 2206 having functions similar to those of the upper chamber 2105, the gas rectifier 2103, the air rectifier 2104, and the lower chamber 2106 of the atmosphere replacement unit 2101, respectively.

The atmosphere replacement unit 2201 includes a column 2221 extending in the Z direction at a center portion of the internal space of the liquid discharge unit 50 as viewed in the Z direction. The column 2221 connects the upper face and the lower face of the housing 80 of the liquid discharge unit 50. The column 2221 is disposed at an intermediate position between the two liquid discharge heads 52a and 52b in the X direction. The column 2221 is preferably formed in a curved shape in the cross section as viewed in the Z direction, for example, a convex shape centrifugally projecting, such as an ellipse, as illustrated in FIG. 22.

As illustrated in FIG. 23, multiple pipes 2231 as elements of the gas supplier are installed on the surface of the column 2221. FIG. 23 illustrates only one of the multiple pipes 2231. The multiple pipes 2231 extend in the Z direction and are arranged at substantially equal intervals in the circumferential direction around the Z axis of the column 2221. Each of the multiple pipes 2231 is exposed to the outside from the upper face of the housing 80 of the liquid discharge unit 50 and communicates with, for example, an external collective pipe.

A gas generated by, for example, a gas generator or a gas in a gas cylinder is introduced into the pipe 2231 from above by the gas supplier. A plurality of holes having a diameter of about 0.5 mm is formed in the surfaces of the pipes 2231, and the gas G1 is blown out from these holes. A lower end 2234 of the pipe 2231 is sealed to stop the gas G1.

As illustrated in FIG. 22, the gas rectifier 2203 is disposed substantially concentrically with the column 2221 as viewed in the Z direction. Thus, the central chamber 2205 is formed with a predetermined width between the gas rectifier 2203 and the outer peripheral faces of the multiple pipes 2231 on the column 2221.

The pair of air rectifiers 2204 are disposed at an end in the positive X direction and an end in the negative X direction of the housing 80 of the liquid discharge unit 50. The normal direction of each of the air rectifiers 2204 is the X direction. Accordingly, the end of the housing 80 of the liquid discharge unit 50 in the positive X direction and the end of the housing 80 of the liquid discharge unit 50 in the negative X direction are respectively partitioned by the air rectifiers 2204 to form the pair of outer chambers 2206.

In the atmosphere replacement unit 2201, the gas G1 is introduced into the central chamber 2205 from the multiple pipes 2231 illustrated in FIG. 23 disposed in the central portion of the liquid discharge unit 50. The gas G1 in the central chamber 2205 passes through the large number of through holes 751 of the perforated metal as the gas rectifier 2203 and is rectified into the low-speed laminar flow. As a result, the gas G2 rectified by the gas rectifier 2203 flows in both the positive and negative X directions from the gas rectifier 2103.

The rectified gas G2 is the low-speed laminar flow that moves in both the positive and negative X directions while keeping a pair of boundary layers L between the gas G2 and the air A1 remaining in the internal space. Thus, the atmosphere replacement unit 2201 can quickly replace the ambient gas around the liquid discharge heads 52a and 52b in the internal space of the liquid discharge unit 50 from air to gas.

The air A1 in the internal space pushed in both the positive and negative X directions by the gas G2 passes through the large number of through holes 751 of the perforated metals as the pair of air rectifiers 2204 and is rectified to the low-speed laminar flow. As a result, the air A2 rectified by the air rectifier 2104 is introduced into the pair of outer chambers 2206. An exhaust is disposed in the outer chambers 2206. The exhaust may have a configuration similar to that illustrated in FIG. 9. The rectified air A2 introduced into the pair of outer chambers 2206 is exhausted to the outside from the exhaust.

As illustrated in FIG. 21, each of the liquid discharge heads 52a and 52b is provided with a discharge port 52c from which the fabrication liquid 10 is discharged on the lower face thereof. In FIG. 20, the discharge port 52c is omitted, but the discharge port 52c is installed separately from the air rectifier 2104 and the exhaust 2107.

FIG. 24 is a diagram illustrating the process of gas replacement by the atmosphere replacement unit 2201 according to the modification of the second embodiment of the present disclosure. The outline of each of portions (A) to (C) of FIG. 24 is similar to that of each of the portions (A) to (C) of FIG. 17.

In an initial state illustrated in the portion (A) of FIG. 24, the internal space of the liquid discharge unit 50 is filled with the air A1. When the atmosphere replacement unit 2201 starts the gas replacement, as illustrated in the portion (B) of FIG. 24, the gas G2 enters the internal space from the central portion, spreads to the left and right, and pushes the air A1 outward in the left and right directions. At this time, the pair of boundary layers L between the gas G2 and the air A1 are formed, and the gas G2 and the air A1 flow to the left and right in FIG. 24 while keeping the pair of boundary layers L. Then, the internal space is filled with the gas G2 in a final state illustrated in the portion (C) of FIG. 24.

### Third Embodiment

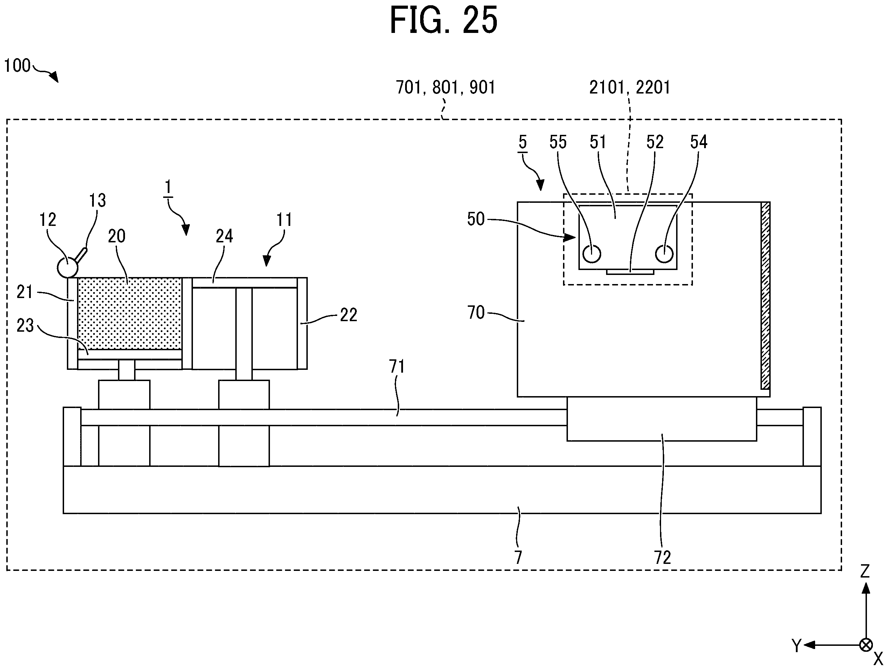

FIG. 25 is a side view of a three-dimensional fabrication apparatus 100 according to a third embodiment of the present disclosure. As illustrated in FIG. 25, the three-dimensional fabrication apparatus 100 according to the third embodiment includes both the atmosphere replacement unit 701, 801, or 901 according to the first embodiment that replaces the ambient gas in the space around the fabrication section 1 from air to gas and the atmosphere replacement unit 2101 or 2201 according to the second embodiment that replaces the ambient gas in the space around the liquid discharge unit 50 from air to gas.

In the third embodiment, an exhaust of the atmosphere replacement unit 2101 or 2201 is preferably disposed outside the housing 80 of the atmosphere replacement unit 701, 801, or 901 by using, for example, a tube so that air is not exhausted to the space around the fabrication section 1. Such a configuration can quickly perform both the gas replacement of the fabrication section 1 and the gas replacement of the liquid discharge unit 50.

In the above-described embodiments, the fabrication unit 5 is used in the three-dimensional fabrication apparatus 100. A three-dimensional fabrication apparatus 100 using a three-dimensional fabrication robot 5a instead of the fabrication unit 5 is described below. FIG. 26 is a schematic view of the three-dimensional fabrication robot 5a according to an embodiment of the present disclosure. The three-dimensional fabrication apparatus 100 may be a three-dimensional fabrication robot system 100a to which the three-dimensional fabrication robot 5a is applied instead of the fabrication unit 5, for example, as illustrated in FIG. 26.

The three-dimensional fabrication robot 5a includes at least multiple joints 2321a, 2321b, and 2321c, multiple connectors 2322a, 2322b, and 2322c, supporters 2350a and 2350b as end effectors, and the liquid discharge unit 50.

The multiple joints 2321a, 2321b, and 2321c are joints of a robot arm of the three-dimensional fabrication robot 5a that are rotationally driven by a drive source. The multiple connectors 2322a, 2322b, and 2322c are links of the robot arm connected between the adjacent joints. In FIG. 26, for example, the three-dimensional fabrication robot 5a has three degrees of freedom including three joints 2321a, 2321b, and 2321c and three connectors 2322a, 2322b, and 2322c but may have four or more degrees of freedom.

The supports 2350a and 2350b serve as end effectors installed at the distal end of the robot arm. In FIG. 26, for example, the supports 2350a and 2350b are disposed at the distal end of the connector 2322a disposed most distally. The supports 2350a and 2350b are, for example, a pair of plates disposed so as to face each other and are movable in a direction orthogonal to the longitudinal direction of the connector 2322a. The pair of supports 2350a and 2350b move in a direction in which the supports 2350a and 2350b approach each other to support an object between the supports 2350a and 2350b. The pair of supports 2350a and 2350b move away from each other to release the object.

In FIG. 26, for example, the supports 2350a and 2350b support the head 52 of the liquid discharge unit 50 according to the above-described embodiments so as to discharge the fabrication liquid 10 downward. The multiple joints 2321a, 2321b, and 2321c and the multiple connectors 2322a, 2322b, and 2322c can move the head 52 to a desired position while maintaining the posture of the head 52 supported by the supports 2350a and 2350b. The fabrication section 1 similar to that in the above-described embodiments is installed below the supports 2350a and 2350b of the three-dimensional fabrication robot 5a. The three-dimensional fabrication robot 5a discharges the fabrication liquid 10 from the head 52 while moving the head 52 above the fabrication section 1 as desired to form the fabrication layer 30 over the fabrication stage 24 of the fabrication section 1 and repeats such a process to form the three-dimensional object.

The supports 2350a and 2350b are not limited to the mechanism that grips an object (e.g., the head 52) from both sides in a predetermined direction as illustrated in FIG. 26 as long as the supports 2350a and 2350b can support the head 52 of the liquid discharge unit 50. For example, a mechanism that attracts an object using, e.g., air or a magnet, or a mechanism that engages with an object using, e.g., a claw or a bolt can be used.

The three-dimensional fabrication robot 5a drives at least one actuator of the multiple joints 2321a, 2321b, and 2321c in response to a control signal from a controller (e.g., the controller 500 in the above-described embodiments) to move the liquid discharge unit 50 to a predetermined position and discharge the fabrication liquid 10 from the head 52. At least a part of the multiple connectors 2322a, 2322b, and 2322c may expand and contract in response to a control signal from the controller.

In the present embodiment illustrated in FIG. 26, the three-dimensional fabrication robot system 100a and the three-dimensional fabrication robot 5a correspond to the three-dimensional fabrication apparatus 100 and the fabrication unit 5 according to the above-described embodiments, respectively.

The supports 2350a and 2350b can also support a three-dimensional object. The supports 2350a and 2350b can be driven to carry the three-dimensional object to a predetermined place. As a result, the three-dimensional object can be efficiently fabricated. For example, when a heating apparatus, a removal apparatus, a degreasing apparatus, and a sintering apparatus, which are separated from the three-dimensional fabrication robot system 100a, serve as the heating unit 200, the removal unit 210, the degreasing unit 300, and the sintering unit 310, respectively, the three-dimensional fabrication robot 5a can efficiently move the three-dimensional object with the supports 2350a and 2350b between these apparatuses.

In the present embodiment described with reference to FIG. 26, similarly to the above-described embodiments of the present disclosure described with reference to, for example, FIGS. 7 to 9, the atmosphere replacement unit 701 may enclose the fabrication section 1, the liquid discharge unit 50 (head 52), and the three-dimensional fabrication robot 5a in a part of space (i.e., the internal space). The atmosphere replacement unit 701 separates a space around the fabrication section 1 or the liquid discharge unit 50 (i.e., an internal space) from the other space in the three-dimensional fabrication robot system 100a by, for example, the housing 80.

### Contribution to Sustainable Development Goals (SDGs) Led by the United Nations

Each of the above-described embodiments of the present disclosure can reduce to the waste and loss of a predetermined gas, and thus contribute to the SDGs 12 and 13.

The embodiments of the present disclosure are described above with reference to specific examples. However, the present disclosure is not limited to the above-described specific examples. The modified specific examples including the features of the present disclosure, in which a person skilled in the art appropriately implements a design change, are also included in the scope of the present disclosure. For example, each element included in each specific example described above and the arrangement, condition, and shape thereof are not limited to the above-described specific examples and can be appropriately changed. The respective elements included in the above-described specific examples can be appropriately combined with each other unless technically contradicted.

Aspects of the present disclosure are, for example, as follows.

### Aspect 1

A three-dimensional fabrication apparatus includes a fabrication section, a liquid discharge unit, and an atmosphere replacement unit (i.e., a gas replacer). The fabrication section forms a powder layer in a fabrication area. The liquid discharge unit discharges a fabrication liquid onto the powder layer laminated in the fabrication section to form a fabrication layer. The atmosphere replacement unit replaces an atmosphere of at least a part of space from air to gas before fabrication.

In other words, a three-dimensional fabrication apparatus includes a fabrication section, a liquid discharge unit, a housing, and a gas replacer. The fabrication section forms a powder layer with a fabrication material in a fabrication area. The liquid discharge unit discharges a fabrication liquid onto the powder layer to form a fabrication layer. The housing has an internal space accommodating at least one of the fabrication section or the liquid discharge unit. The gas replacer to generate and supply a laminar flow of a predetermined gas other than an air into the internal space of the housing to replace an ambient gas in the internal space from the air to the predetermined gas.

### Aspect 2

In the three-dimensional fabrication apparatus according to Aspect 1, the atmosphere replacement unit replaces the atmosphere while maintaining a boundary layer between the gas and the air in the space when replacing the atmosphere.

In other words, the gas replacer supplies the laminar flow of the predetermined gas into the internal space to form a boundary layer between the predetermined gas and the air in the internal space.

### Aspect 3

In the three-dimensional fabrication apparatus according to Aspect 1, the atmosphere replacement unit includes a gas supplier, a gas rectifier, and an exhaust. The gas supplier supplies the gas to the space. The gas rectifier is installed in the space. The gas rectifier passes and rectifies the gas supplied into the space by the gas supplier and supplies the gas to the fabrication section or the liquid discharge unit. The exhaust exhausts the air in the space.

In other words, the gas replacer includes a gas supplier, a gas rectifier, and an exhaust. the gas supplier supplies the predetermined gas into the internal space. The gas rectifier, including a plate having multiple through holes, is in the internal space. The gas rectifier rectifies the predetermined gas supplied from the gas supplier and passing through the multiple through holes of the gas rectifier. The exhaust exhausts the air from the internal space outside the housing.

### Aspect 4

In the three-dimensional fabrication apparatus according to Aspect 3, the atmosphere replacement unit includes an air rectifier installed in the space. The air rectifier passes and rectifies the air in the space and supplies the air to the exhaust.

In other word, the gas replacer further includes an air rectifier in the internal space. The air rectifier rectifies the air passing through the air rectifier toward the exhaust.

### Aspect 5

In the three-dimensional fabrication apparatus according to Aspect 3 or 4, the gas supplier introduces the gas (i.e., the predetermined gas) into the space (i.e., the internal space) from above the gas rectifier, and the exhaust exhausts the air from below the gas rectifier.

In other words, the gas supplier introduces the predetermined gas downward to the gas rectifier in the internal space. The plate of the gas rectifier is horizontally disposed. The exhaust below the gas rectifier exhausts the air outside the housing.

### Aspect 6

In the three-dimensional fabrication apparatus according to Aspect 5, the gas (i.e., the predetermined gas) includes any one of nitrogen, helium, and neon.

### Aspect 7

In the three-dimensional fabrication apparatus according to Aspect 3 or 4, the gas supplier introduces the gas (i.e., the predetermined gas) into the space (i.e., the internal space) from below the gas rectifier, and the exhaust exhausts the air from above the gas rectifier.

In other words, the gas supplier introduces the predetermined gas upward to the gas rectifier in the internal space. The plate of the gas rectifier is horizontally disposed. The exhaust above the gas rectifier exhausts the air outside the housing.

### Aspect 8

In the three-dimensional fabrication apparatus according to Aspect 7, the gas (i.e., the predetermined gas) includes any one of argon and carbon dioxide.

### Aspect 9

In the three-dimensional fabrication apparatus according to Aspect 3 or 4, the gas supplier, the gas rectifier, and the exhaust are arranged in a horizontal direction, and the gas flows in the horizontal direction in the space (i.e., the internal space).

In other words, the gas supplier supplies the gas in the horizontal direction toward the gas rectifier. The plate of the gas rectifier is disposed in a vertical direction. The exhaust is disposed downstream from the gas rectifier in the horizontal direction.

### Aspect 10

In the three-dimensional fabrication apparatus according to any one of Aspects 1 to 9, a hopper supplies a fabrication material to the fabrication section.

In other words, the three-dimensional fabrication apparatus further includes a storage hopper to supply the fabrication material to the fabrication section.

### Aspect 11

In the three-dimensional fabrication apparatus according to any one of Aspects 1 to 10, the liquid discharge unit discharges the fabrication liquid onto the powder layer by an inkjet method.

In other words, the liquid discharge unit includes a liquid discharge head having nozzle to discharge the fabrication liquid from the nozzle.

### Aspect 12

The three-dimensional fabrication apparatus according to any one of Aspects 1 to 11, further includes a heating unit and a removal unit. The heating unit heats a fabrication object formed by laminating the fabrication layers. The removal unit removes an excess fabrication material applied to the heated fabrication object to obtain a green body.

In other words, three-dimensional fabrication apparatus further includes a heating unit to heat a fabrication object formed by a lamination of the fabrication layer, and a removal unit to remove the fabrication material excessively adhered to the fabrication object from the fabrication object heated by the heating unit, to obtain a green body.

### Aspect 13

The three-dimensional fabrication apparatus according to Aspect 12, further includes a degreasing unit and a sintering unit. The degreasing unit degreases the green body. The sintering unit sinters the green body degreased by the degreasing unit.

### Aspect 14

A three-dimensional fabrication method uses a three-dimensional fabrication apparatus including a fabrication section, a liquid discharge unit, and an atmosphere replacement unit. The fabrication section forms a powder layer in a fabrication area. The liquid discharge unit discharges a fabrication liquid onto the powder layer laminated in the fabrication section to form a fabrication layer. The atmosphere replacement unit replaces an atmosphere of at least a part of space from air to gas before fabrication. The three-dimensional fabrication method includes a step in which the atmosphere replacement unit replaces the atmosphere while maintaining a boundary layer between the gas and the air in the space when replacing the atmosphere.

In other words, a three-dimensional fabrication method includes forming a powder layer in a fabrication area, discharging a fabrication liquid onto the powder layer, and generating and supplying a laminar flow of a predetermined gas other than an air into the fabrication area to replace an ambient gas in the fabrication area from the air to the predetermined gas.

Any one of the above-described operations may be performed in various other ways, for example, in an order different from the one described above.

## Claims

1. A three-dimensional fabrication apparatus (100, 100a) comprising:
a fabrication section (1) to form a powder layer with a fabrication material in a fabrication area;
a liquid discharge unit (50) to discharge a fabrication liquid onto the powder layer to form a fabrication layer;
a housing (80) having an internal space accommodating at least one of the fabrication section (1) or the liquid discharge unit (50); and
a gas replacer (701, 801, 901, 2101, 2201) to generate and supply a laminar flow of a predetermined gas other than an air into the internal space of the housing to replace an ambient gas in the internal space from the air to the predetermined gas.

2. The three-dimensional fabrication apparatus (100, 100a) according to claim 1,
wherein the gas replacer (701, 801, 901, 2101, 2201) supplies the laminar flow of the predetermined gas into the internal space to form a boundary layer between the predetermined gas and the air in the internal space.

3. The three-dimensional fabrication apparatus (100, 100a) according to claim 1, wherein the gas replacer (701, 801, 901, 2101, 2201) includes:
a gas supplier (702, 2102) to supply the predetermined gas into the internal space;
a gas rectifier (703, 803, 903, 2103, 2203), including a plate having multiple through holes, in the internal space, the gas rectifier (703, 803, 903, 2103, 2203) to rectify the predetermined gas supplied from the gas supplier (702, 2102) and passing through the multiple through holes of the gas rectifier (703, 803, 903, 2103, 2203); and
an exhaust (707, 2107) to exhaust (707, 2107) the air from the internal space outside the housing (80).

4. The three-dimensional fabrication apparatus (100, 100a) according to claim 3,
wherein the gas replacer (701, 801, 901, 2101, 2201) further includes an air rectifier (704, 804, 904, 2104) in the internal space, the air rectifier (704, 804, 904, 2104) to rectify the air passing through the air rectifier (704, 804, 904, 2104) toward the exhaust (707, 2107).

5. The three-dimensional fabrication apparatus (100, 100a) according to claim 3 or 4,
wherein the gas supplier (702, 2102) introduces the predetermined gas downward to the gas rectifier (703, 803, 903, 2103, 2203) in the internal space,
the plate of the gas rectifier is horizontally disposed, and
the exhaust (707, 2107) below the gas rectifier (703, 803, 903, 2103, 2203) exhausts the air outside the housing (80).

6. The three-dimensional fabrication apparatus (100, 100a) according to claim 5,
wherein the predetermined gas includes any one of nitrogen, helium, and neon.

7. The three-dimensional fabrication apparatus (100, 100a) according to claim 3 or 4,
wherein the gas supplier (702, 2102) introduces the predetermined gas upward to the gas rectifier (703, 803, 903, 2103, 2203) in the internal space,
the plate of the gas rectifier is horizontally disposed, and
the exhaust (707, 2107) above the gas rectifier (703, 803, 903, 2103, 2203) exhausts the air outside the housing (80).

8. The three-dimensional fabrication apparatus (100, 100a) according to claim 7,
wherein the predetermined gas includes any one of argon and carbon dioxide.

9. The three-dimensional fabrication apparatus (100, 100a) according to claim 3 or 4,
wherein the gas supplier (702, 2102) supplies the predetermined gas in a horizontal direction toward the gas rectifier,
the plate of the gas rectifier (703, 803, 903, 2103, 2203) is disposed in a vertical direction, and
the exhaust (707, 2107) is disposed downstream from the gas rectifier (703, 803, 903, 2103, 2203) in the horizontal direction.

10. The three-dimensional fabrication apparatus (100, 100a) according to any one of claims 1 to 9, further comprising a storage hopper (40) to supply the fabrication material to the fabrication section (1).

11. The three-dimensional fabrication apparatus (100, 100a) according to any one of claims 1 to 10,
wherein the liquid discharge unit (50) includes a liquid discharge head (52) having a nozzle to discharge the fabrication liquid to from the nozzle.

12. The three-dimensional fabrication apparatus (100, 100a) according to any one of claims 1 to 11, further comprising:
a heating unit (200) to heat a fabrication object formed by a lamination of the fabrication layer; and
a removal unit (210) to remove the fabrication material excessively adhered to the fabrication object from the fabrication object heated by the heating unit (200), to obtain a green body.

13. The three-dimensional fabrication apparatus (100, 100a) according to claim 12, further comprising:
a degreasing unit (300) to degrease the green body; and
a sintering unit (310) to sinter the green body degreased by the degreasing unit (310).

14. A three-dimensional fabrication method comprising:
forming a powder layer in a fabrication area;
discharging a fabrication liquid onto the powder layer; and
generating and supplying a laminar flow of a predetermined gas other than an air into the fabrication area to replace an ambient gas in the fabrication area from the air to the predetermined gas.
